(19) Europäisches Patentamt
European Patent Office
Office européen des brevets

(11) **EP 3 778 797 A1**

(12) **EUROPEAN PATENT APPLICATION**
published in accordance with Art. 153(4) EPC

(43) Date of publication:
**17.02.2021 Bulletin 2021/07**

(51) Int Cl.:
***C09D 11/322*** *(2014.01)*    ***B41J 2/01*** *(2006.01)*
***B41M 5/00*** *(2006.01)*

(21) Application number: **19776480.6**

(22) Date of filing: **22.03.2019**

(86) International application number:
**PCT/JP2019/012272**

(87) International publication number:
**WO 2019/188855 (03.10.2019 Gazette 2019/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2018 JP 2018069029**

(71) Applicant: **FUJIFILM CORPORATION
Minato-ku
Tokyo 106-8620 (JP)**

(72) Inventors:
• **KAWAI, Masaharu**
  **Ashigarakami-gun, Kanagawa 258-8577 (JP)**
• **SHINOHARA, Ryuji**
  **Ashigarakami-gun, Kanagawa 258-8577 (JP)**
• **HATTORI, Kazumasa**
  **Ashigarakami-gun, Kanagawa 258-8577 (JP)**
• **SUGISHIMA, Akinori**
  **Ashigarakami-gun, Kanagawa 258-8577 (JP)**

(74) Representative: **Klunker IP
Patentanwälte PartG mbB
Destouchesstraße 68
80796 München (DE)**

(54) **INKJET INK COMPOSITION, IMAGE RECORDING METHOD, AND IMAGE RECORDING ARTICLE**

(57)    An embodiment of the present invention provides an inkjet ink composition including water, a dispersant, white inorganic pigment particles having an average primary particle diameter of 150 nm to 400 nm, and resin particles A having a glass transition temperature of higher than 120°C; an image recording method carried out using the inkjet ink composition; and an image recorded material including a solidified material of the inkjet ink composition.

FIG. 1

**Description**

**BACKGROUND OF THE INVENTION**

1. Field of the Invention

The present disclosure relates to an inkjet ink composition, an image recording method, and an image recorded material.

2. Description of the Related Art

A recording method carried out using an ink jet method has been widely used because high-quality images can be recorded on wide variety of base materials by allowing an ink composition to be jetted in the form of liquid droplets from a plurality of nozzles provided in an ink jet head.

Various forms of image recording methods carried out using an ink jet method have been suggested for the inkjet ink composition.

For example, JP2014-210837A discloses an aqueous white ink for ink jet which contains at least titanium oxide, a pigment-dispersing resin, an organic solvent, and water, in which a resin obtained by copolymerizing at least α-olefin and maleic acid and/or maleic acid anhydride is used as the pigment-dispersing resin.

JP2015-183112A discloses an inkjet ink set used for an ink-low-absorbent recording medium or ink-non-absorbent recording medium, the inkjet ink set including: an ink composition which contains water and a coloring material; a first clear ink composition which contains first resin particles having a glass transition temperature of 50°C or higher but does not substantially contain a coloring material; and a second clear ink composition which contains second resin particles having a glass transition temperature of lower than 50°C but does not substantially contain a coloring material.

**SUMMARY OF THE INVENTION**

In the related art, it has been known that images are recorded on a colored base material, a transparent base material, or the like using an inkjet ink composition containing white inorganic pigment particles.

In such recorded images, the light transmittance is required to be low (also referred to as "concealability") in some cases.

For example, it is considered that in a case where an image is recorded on a surface of a colored base material, visual recognition of the color of the base material through the image is prevented due to high concealability of the image.

Further, it is considered that in a case where an image is recorded on a surface of a transparent base material, degradation of the visibility of the image caused by transmission of light through the transparent base material and the image is prevented due to high concealability of the image.

Further, it is also known that the above-described image recorded using an inkjet ink composition containing white inorganic pigment particles is used as a base to be recorded under another colored image.

The visibility of a colored image is considered to be improved since it is possible to prevent the color of the base material from being visible or to prevent light from being transmitted through the base material and the image by using an image with high concealability as the base, as described above.

Further, an inkjet ink composition is required to have jetting stability in some cases.

In the present disclosure, the jetting stability indicates a property in which a nozzle is unlikely to be clogged in a case of jetting an inkjet ink composition from the nozzle in an ink jet method.

Particularly, it is considered that in a case where pigment particles having a large particle diameter (for example, the average primary particle diameter thereof is greater than 400 nm) are used for the purpose of improving the concealability described above, a nozzle is likely to be clogged due to the large particle diameter of the pigment particles.

As described above, it is difficult to achieve both the concealability and the jetting stability.

An object to be achieved by an aspect of the present disclosure is to provide an inkjet ink composition from which an image with excellent concealability and jetting stability is obtained, an image recording method carried out using the inkjet ink composition, and an image recorded material containing a solidified material of the inkjet ink composition.

Specific means for achieving the above-described objects includes the following aspects.

<1> An inkjet ink composition comprising: water; a dispersant; white inorganic pigment particles having an average primary particle diameter of 150 nm to 400 nm; and resin particles A having a glass transition temperature of higher than 120°C.

<2> The inkjet ink composition according to <1>, in which titanium dioxide particles are contained as the white inorganic pigment particles, and a content of the titanium dioxide particles is 20% by mass or greater with respect to a total mass of the white inorganic pigment particles.

<3> The inkjet ink composition according to <1> or <2>, in which a volume content of the resin particles A is in a range of 80% by volume to 100% by volume with respect to a volume of all resin particles contained in the ink composition.

<4> The inkjet ink composition according to any one of <1> to <3>, in which x% by mass of a content of all pigment particles contained in the ink composition with respect to a total mass of the ink composition and y% by mass of a content of all the resin particles contained in the ink composition with respect to the total mass of the ink composition satisfy all Expressions A-1 to A-3.

$$\text{Expression A-1: } x^2 + y^2 \leq 300$$

$$\text{Expression A-2: } x \geq 5$$

$$\text{Expression A-3: } y \geq 1$$

<5> The inkjet ink composition according to any one of <1> to <4>, in which x% by mass of a content of all pigment particles contained in the ink composition with respect to a total mass of the ink composition and y% by mass of a content of all the resin particles contained in the ink composition with respect to the total mass of the ink composition satisfy all Expressions B-1 to B-3.

$$\text{Expression B-1: } x^2 + y^2 \leq 300$$

$$\text{Expression B-2: } 12 \geq x \geq 5$$

$$\text{Expression B-3: } 12 \geq y \geq 1$$

<6> The inkjet ink composition according to any one of <1> to <5>, in which x% by mass of a content of all pigment particles contained in the ink composition with respect to a total mass of the ink composition, y% by mass of a content of all the resin particles contained in the ink composition with respect to the total mass of the ink composition, and z% by mass of a content of the dispersant with respect to the total mass of the ink composition satisfy all Expressions C-1 to C-4.

$$\text{Expression C-1: } x^2 + (y + z)^2 \leq 350$$

$$\text{Expression C-2: } x \geq 5$$

$$\text{Expression C-3: } y \geq 1$$

$$\text{Expression C-4: } z \geq 0.1$$

<7> The inkjet ink composition according to any one of <1> to <6>, in which x% by mass of a content of all pigment particles contained in the ink composition with respect to a total mass of the ink composition, y% by mass of a content of all the resin particles contained in the ink composition with respect to the total mass of the ink composition, and z% by mass of a content of the dispersant with respect to the total mass of the ink composition satisfy all Expressions D-1 to D-4.

$$\text{Expression D-1: } x^2 + (y + z)^2 \leq 350$$

$$\text{Expression D-2: } 12 \geq x \geq 5$$

$$\text{Expression D-3: } 12 \geq y \geq 1$$

$$\text{Expression D-4: } 2.4 \geq z \geq 0.1$$

<8> The inkjet ink composition according to any one of <1> to <7>, in which the glass transition temperature of the resin particles A is higher than 120°C and 200°C or lower.

<9> The inkjet ink composition according to any one of <1> to <8>, in which a content of the dispersant is in a range of 3% by mass to 20% by mass with respect to a content of all pigment particles contained in the ink composition.

<10> An image recording method comprising: a step of applying the inkjet ink composition according to any one of <1> to <9> onto a surface of a base material using an ink jet method.

<11> The image recording method according to <10>, further comprising: a step of adding a treatment liquid containing an aggregating agent onto the surface of a base material before the step of applying the inkjet ink composition onto the surface of the base material, in which the step of applying the inkjet ink composition onto the surface of the base material is a step of applying the inkjet ink composition to at least a part of a region on the surface of the base material by the ink jet method, the region applied with the treatment liquid.

<12> The image recording method according to <11>, in which the aggregating agent is an organic acid.

<13> The image recording method according to <11> or <12>, in which an amount of the aggregating agent to be applied to the base material in the step of adding the treatment liquid onto the surface of the base material is in a range of 0.3 mmol/m$^2$ to 2.2 mmol/m$^2$.

<14> The image recording method according to any one of <10> to <13>, in which the base material is an impermeable medium.

<15> An image recorded material comprising: a base material; and a solidified material of the inkjet ink composition according to any one of <1> to <9>.

According to an aspect of the present disclosure, it is possible to provide an inkjet ink composition from which an image with excellent concealability and jetting stability is obtained, an image recording method carried out using the inkjet ink composition, and an image recorded material containing a solidified material of the inkjet ink composition.

## BRIEF DESCRIPTION OF THE DRAWINGS

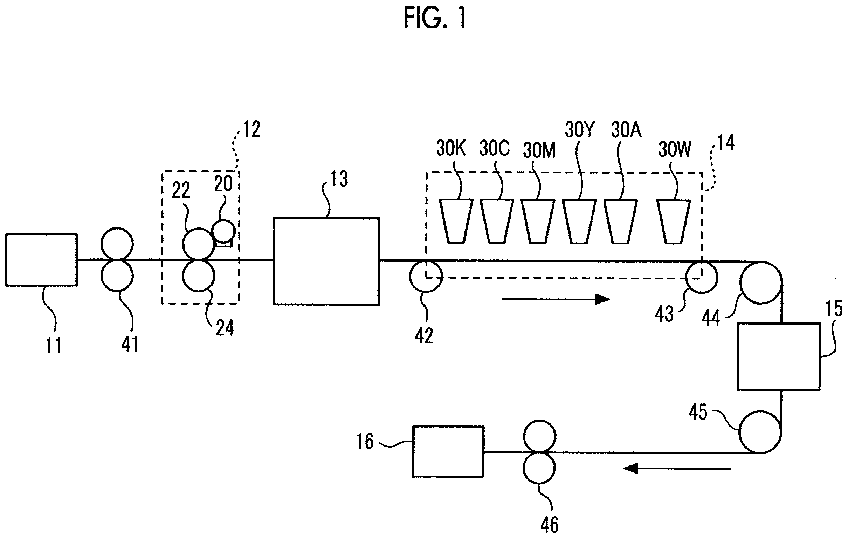

Fig. 1 is a schematic configuration view illustrating a configuration example of an ink jet recording device used for performing image recording.

## DESCRIPTION OF THE PREFERRED EMBODIMENTS

In the present disclosure, the numerical ranges shown using "to" indicate ranges including the numerical values described before and after "to" as the lower limits and the upper limits. In a numerical range described in a stepwise manner in the present disclosure, an upper limit or a lower limit described in a certain numerical range may be replaced with an upper limit or a lower limit in another numerical range described in a stepwise manner. Further, in a numerical range described in the present disclosure, an upper limit or a lower limit described in a certain numerical range may be replaced with a value described in an example.

In the present disclosure, in a case where a plurality of substances corresponding to respective components in a composition are present, the amount of the respective components in the composition indicates the total amount of the plurality of substances present in the composition unless otherwise specified.

In the present disclosure, "recording an image" indicates that an image is drawn on a base material using an ink composition and a treatment liquid as necessary and the drawn image is fixed. The "image" may be an image recorded with ink and includes characters, solid films, and the like.

In the present disclosure, the meaning of the term "step" includes not only an independent step but also a step whose intended purpose is achieved even in a case where the step is not clearly distinguished from other steps.

In the present disclosure, "(meth)acryl" indicates at least one of acryl or methacryl, and "(meth)acrylate" indicates at least one of acrylate or methacrylate.

(Inkjet ink composition)

An inkjet ink composition according to the embodiment of the present disclosure (hereinafter, also simply referred to as an "ink composition") contains water, a dispersant, white inorganic pigment particles having an average primary particle diameter of 150 nm to 400 nm (hereinafter, also referred to as "specific pigment particles"), and resin particles A having a glass transition temperature (Tg) of higher than 120°C.

Further, the ink composition according to the embodiment of the present disclosure contains white specific pigment particles, and thus is suitably used as a white ink composition.

An image with excellent concealability and excellent jetting stability can be obtained from the ink composition according to the embodiment of the present disclosure.

The reason why the above-described effects are obtained is not clear, but is assumed as follows. However, the ink composition according to the embodiment of the present disclosure is not limited to the following reason.

The ink composition according to the embodiment of the present disclosure contains white inorganic pigment particles having an average primary particle diameter of 150 nm to 400 nm.

It is considered that an image with excellent concealability is obtained because the white inorganic pigment particles have an average primary particle diameter of 150 nm or greater and a gap is generated between the white inorganic pigment particles due to the resin particles A described below.

Further, it is considered that in a case where the average primary particle diameter of the white inorganic pigment particles is 400 nm or less, a nozzle in a case of jetting the ink is unlikely to be clogged and the jetting stability is excellent.

Further, the ink composition according to the embodiment of the present disclosure contains resin particles A having a Tg of higher than 120°C.

It is considered that the resin particles A are likely to remain in the recorded image in a particle shape because the Tg of the resin particles A is higher than 120°C, and contact between the white inorganic pigment particles is suppressed because the resin particles A function as a spacer between the white inorganic pigment particles.

As described above, it is considered that the concealability is improved because the gap between the white inorganic pigment particles is ensured and thus scattering of light due to the white inorganic pigment particles is likely to increase.

JP2014-210837A describes that the aqueous white ink for ink jet contains resin particles having a glass transition temperature (Tg) of 50°C to 120°C for the purpose of improving resistance such as rub resistance or chemical resistance.

In a case where the ink contains only the resin particles having a low glass transition temperature, the concealability in the image is decreased. The reason for this is assumed to be that the gap between the white inorganic pigment particles is unlikely to be ensured because the Tg of the resin particles is low and the resin particles are soft.

Further, in the ink set described in JP2015-183112A, a first clear ink composition containing first resin particles having a glass transition temperature of 50°C or higher is described as an ink containing resin particles. JP2015-183112A describes that the first clear ink composition is an ink composition that does not substantially contain a coloring material, and an object of improving the concealability does not exist in the first place.

Hereinafter, the details of the ink composition according to the embodiment of the present disclosure will be described.

<Specific pigment particles>

The ink composition according to the embodiment of the present disclosure contains white inorganic pigment particles (specific pigment particles) having an average primary particle diameter of 150 nm to 400 nm.

[Average primary particle diameter]

From the viewpoints of the concealability and the jetting stability, the average primary particle diameter of the specific pigment particles is preferably in a range of 150 nm to 400 nm and more preferably in a range of 200 nm to 300 nm.

The average primary particle diameter of the specific pigment particles is a value measured using a transmission electron microscope (TEM). A transmission electron microscope 1200EX (manufactured by JEOL Ltd.) can be used for the measurement.

Specifically, the average particle diameter thereof is acquired by adding an ink composition diluted to 1000 times dropwise to Cu200 mesh (manufactured by JEOL Ltd.) to which a carbon film has been attached, drying the ink composition, measuring the equivalent circle diameters of 300 independent particles that do not overlap each other in the image enlarged at a magnification of 100000 times using a TEM, and averaging the measured values.

[White inorganic pigment particles]

The white inorganic pigment particles used as the specific pigment particles are not particularly limited, and known white inorganic pigment particles are used, but titanium dioxide particles ($TiO_2$), zinc oxide particles, barium sulfate particles, silicon oxide particles, aluminum oxide particles. Inorganic pigment particles such as magnesium oxide particles, calcium silicate, calcium carbonate particles, kaolin particles, talc particles and colloidal silica particles can be preferably mentioned, and titanium dioxide particles are preferable.

From the viewpoint of the concealability, particles having a large refractive index are preferable as the white inorganic pigment particles. The refractive index is preferably 2.0 or more. Further, titanium dioxide particles are preferable as the particles having a large refractive index.

As titanium dioxide, any of an anatase type, a rutile type, a brookite type, and the like can be used. Among these, the rutile type is preferable from the viewpoint of the refractive index. Further, the rutile type has an advantage that the influence on the resin component, the resin base material, and the like is small because of a weaker photocatalytic action than that of the anatase type or the brookite type.

In the present disclosure, the "refractive index" indicates a value measured by ellipsometry using visible light having a wavelength of 550 nm at a temperature of 23°C, unless otherwise specified.

[Content]

The ink composition according to the present disclosure may contain only one kind of specific pigment particles or a combination of two or more kinds thereof.

Further, the specific pigment particles include titanium dioxide particles, and the content of the titanium dioxide particles is preferably 20% by mass or greater, more preferably 50% by mass or greater, and more preferably 80% by mass or greater with respect to the total mass of the specific pigment particles. The upper limit of the content thereof is not particularly limited and may be 100% by mass or less.

The content of the specific pigment particles is preferably in a range of 1% by mass to 20% by mass, more preferably in a range of 3% by mass to 15% by mass, and more preferably in a range of 5% by mass to 12% by mass with respect to the total mass of the ink composition.

<Other pigment particles>

The ink composition according to the embodiment of the present disclosure may further contain other pigment particles.

Examples of other pigment particles include pigment particles other than white pigment particles.

Examples of the pigment particles other than white pigment particles include organic pigment particles and inorganic pigment particles, and preferred examples thereof include the pigment particles described in paragraphs 0029 to 0041 of JP2011-094112A.

In the present disclosure, the specific pigment particles and the other pigment particles are collectively referred to as "all pigment particles contained in the ink composition".

The content (x% by mass described below) of all the pigment particles contained in the ink composition is preferably in a range of 1% by mass to 20% by mass, more preferably in a range of 3% by mass to 15% by mass, and more preferably in a range of 5% by mass to 12% by mass with respect to the total mass of the ink composition according to the embodiment of the present disclosure.

From the viewpoint of the concealability of an image to be obtained, the content (x% by mass described below) of all the pigment particles contained in the ink composition is preferably 1% by mass or greater, preferably 3% by mass or greater, and more preferably 5% by mass or greater with respect to the total mass of the ink composition according to the embodiment of the present disclosure.

Further, from the viewpoint of the jetting stability, the content thereof is preferably 15% by mass or less and more preferably 12% by mass or less.

<Resin particles A>

The ink composition according to the embodiment of the present disclosure contains resin particles A having a glass transition temperature (Tg) of higher than 120°C.

[Tg]

The Tg of the resin particles A is higher than 120°C and preferably 125°C or higher, more preferably 135°C or higher, and still more preferably 145°C or higher from the viewpoint of the concealability. The upper limit of Tg of the resin particles A is not particularly limited, but is preferably 300°C or lower, more preferably 200°C or lower, and still more preferably 180°C or lower from the viewpoints of improving the concealability by improving the surface state of an image to be obtained.

In the present disclosure, a measured Tg obtained by actual measurement is used as the glass transition temperature.

Specifically, the measured Tg indicates a value measured under typical measurement conditions using a differential scanning calorimeter (DSC) EXSTAR6220 (manufactured by Hitachi High-Tech Corporation). In a case where it is difficult to perform measurement due to decomposition or the like of the resin, a calculated Tg to be calculated by the following calculation formula is used. The calculated Tg indicates a value calculated by Formula (1).

$$1/Tg = \Sigma \, (Xi/Tgi) \cdots (1)$$

Here, it is assumed that the resin as a target for calculation is formed by copolymerizing n kinds of monomer components (i represents 1 to n). Xi represents a weight fraction ($\Sigma Xi = 1$) of the i-th monomer and Tgi represents a glass transition temperature (absolute temperature) of a homopolymer of the i-th monomer. Here, $\Sigma$ is obtained by summing 1 to n as i. Further, values in Polymer Handbook (3rd Edition) (written by J. Brandrup, E. H. Immergut (Wiley-Interscience, 1989)) are employed as the value (Tgi) of the glass transition temperature of the homopolymer of each monomer. The values of the glass transition temperatures of homopolymers of monomers, which are not described in the document, are obtained as the measured Tg by the above-described measuring method after the homopolymers of the monomers are prepared. Here, in a case where the weight-average molecular weight of the homopolymer is set to 10000 or greater, the influence of the weight-average molecular weight on the Tg of the polymer can be ignored.

The glass transition temperature of the resin particles A can be appropriately controlled by a commonly used method. For example, the glass transition temperature of the resin particles A can be set to be in a desired range by appropriately selecting the kind of monomer (polymerizable compound) constituting the resin particles A, the component proportion thereof, the molecular weight of the resin constituting the resin particles A, and the like.

[Resin]

Examples of the resin in the resin particles A include an acrylic resin, an epoxy resin, a polyether resin, a polyamide resin, a unsaturated polyester resin, a phenol resin, a silicone resin, a fluororesin, a polyvinyl resin (such as vinyl chloride, vinyl acetate, polyvinyl alcohol, or polyvinyl butyral), an alkyd resin, a polyester resin (such as a phthalic acid resin), and an amino material (such as a melamine resin, a melamine formaldehyde resin, an aminoalkyd co-condensation resin, a urea resin, or a urea resin).

Among the above-described resins, as the resin particles A, particles of an acrylic resin, a polyether resin, a polyester resin, and a polyolefin resin are preferable. Further, from the viewpoint of improving the concealability, particles of an acrylic resin are more preferable.

Further, in the present specification, the acrylic resin indicates a resin having a structural unit derived from (meth)acrylic acid or a (meth)acrylate compound. The acrylic resin may have a structural unit other than the structural unit derived from the (meth)acrylic acid or the (meth)acrylate compound.

Further, the resin forming the resin particles A may be a copolymer having two or more kinds of structural units constituting the resins exemplified above or a mixture of two or more kinds of the resins. Further, the resin particles A may be formed of a mixture of two or more kinds of resins and may be composite resin particles obtained by laminating two or more kinds of resins, for example, a core and a shell.

As the resin particles A, resin particles A obtained by a phase-transfer emulsification method are preferable and particles of a self-dispersing resin (self-dispersing resin particles) are more preferable.

Here, the self-dispersing resin indicates a water-insoluble resin which may enter a dispersed state in an aqueous medium by a functional group (particularly, an acidic group of a carboxy group or the like or a salt thereof) contained in the resin itself in a case where the resin has entered the dispersed state according to the phase-transfer emulsification method in the absence of a surfactant.

Here, the concept of the dispersed state includes both an emulsified state (emulsion) in which a water-insoluble resin is dispersed in the aqueous medium in a liquid state and a dispersed state (suspension) in which a water-insoluble resin is dispersed in the aqueous medium in a solid state.

In addition, the term "water-insoluble" indicates that the amount of substance to be dissolved in 100 parts by mass (25°C) of water is less than 5.0 parts by mass (preferably less than 1.0 parts by mass).

As the phase-transfer emulsification method, a method of dissolving or dispersing a resin in a solvent (for example, a water-soluble solvent), putting the solution into water without adding a surfactant thereto, stirring and mixing the solution, and removing the solvent in a state in which a salt-forming group (for example, an acidic group such as a carboxy group) contained in the resin is neutralized, to obtain an aqueous dispersion in an emulsified or dispersed state is exemplified.

The self-dispersing resin particles can be selected from among self-dispersing resin particles described in paragraphs 0090 to 0121 of JP2010-064480A and paragraphs 0130 to 0167 of JP2011-068085A and then used. Particularly, it is preferable that particles having a glass transition temperature of higher than 120°C are selected from among self-dispersing resin particles described in the same publications and then used.

As described above, self-dispersing resin particles containing a carboxy group are preferable as the self-dispersing resin particles.

As a form of the self-dispersing resin particles containing a carboxy group, a form in which particles formed of a resin having a structural unit derived from unsaturated carboxylic acid (preferably (meth)acrylic acid) is more preferable.

As a form of the self-dispersing resin particles containing a carboxy group, a form in which particles formed of a resin having a structural unit containing an alicyclic group, a structural unit containing an alkyl group, and a structural unit derived from unsaturated carboxylic acid (preferably (meth)acrylic acid) is still more preferable.

The content of the structural unit containing an alicyclic group in the above-described resin (the total content in a case where two or more kinds of structural units are present) is preferably in a range of 3% by mass to 95% by mass, more preferably in a range of 5% by mass to 75% by mass, and still more preferably in a range of 10% by mass to 50% by mass with respect to the total mass of the resin.

The content of the structural unit containing an alkyl group in the above-described resin (the total content in a case where two or more kinds of structural units are present) is preferably in a range of 5% by mass to 90% by mass, more preferably in a range of 10% by mass to 85% by mass, still more preferably in a range of 20% by mass to 80% by mass, even still more preferably in a range of 30% by mass to 75% by mass, and even still more preferably in a range of 40% by mass to 75% by mass with respect to the total mass of the resin.

The content of the structural unit derived from unsaturated carboxylic acid (preferably (meth)acrylic acid) in the above-described resin (the total content in a case where two or more kinds of structural units are present) is preferably in a range of 2% by mass to 30% by mass, more preferably in a range of 5% by mass to 20% by mass, and still more preferably in a range of 5% by mass to 15% by mass with respect to the total mass of the resin.

Further, a form in which the structural unit containing an alicyclic group is changed into a structural unit containing an aromatic group or a form which has a structural unit containing an aromatic group in addition to the structural unit containing an alicyclic group, in the "still more preferable form of the self-dispersing resin particles containing a carboxy group" described above, is also preferable as the form of self-dispersing resin particles containing a carboxy group.

In both forms, the total content of the structural unit containing an alicyclic group and the structural unit containing an aromatic group is preferably in a range of 3% by mass to 95% by mass, more preferably in a range of 5% by mass to 75% by mass, and still more preferably in a range of 10% by mass to 50% by mass with respect to the total mass of the resin.

It is preferable that the structural unit containing an alicyclic group is a structural unit derived from alicyclic (meth)acrylate.

Examples of the alicyclic (meth)acrylate include monocyclic (meth)acrylate, bicyclic (meth)acrylate, and tricyclic (meth)acrylate.

Examples of the monocyclic (meth)acrylate include cycloalkyl (meth)acrylate in which the number of carbon atoms in a cycloalkyl group is in a range of 3 to 10, such as cyclopropyl (meth)acrylate, cyclobutyl (meth)acrylate, cyclopentyl (meth)acrylate, cyclohexyl (meth)acrylate, cycloheptyl (meth)acrylate, cyclooctyl (meth)acrylate, cyclononyl (meth)acrylate, or cyclodecyl (meth)acrylate.

Examples of the bicyclic (meth)acrylate include isobornyl (meth)acrylate and norbornyl (meth)acrylate.

Examples of the tricyclic (meth)acrylate include adamantyl (meth)acrylate, dicyclopentanyl (meth)acrylate, and dicyclopentenyloxyethyl (meth)acrylate.

These may be used alone or in the form of a mixture of two or more kinds thereof.

Among these, from the viewpoints of the fixing property, the blocking resistance, and the dispersion stability of the self-dispersing resin particles, bicyclic (meth)acrylate or tri- or higher cyclic polycyclic (meth)acrylate is preferable; and isobornyl (meth)acrylate, adamantyl (meth)acrylate, or dicyclopentenyl (meth)acrylate is more preferable.

As the structural unit containing an aromatic group, a structural unit derived from an aromatic group-containing monomer is preferable.

Examples of the aromatic group-containing monomer include an aromatic group-containing (meth)acrylate monomer (such as phenoxyethyl (meth)acrylate, benzyl (meth)acrylate, or phenyl (meth)acrylate) and a styrene compound.

Among these, from the viewpoints of the balance between the hydrophilicity and the hydrophobicity of the resin chain and the ink fixing property, an aromatic group-containing (meth)acrylate monomer is preferable; phenoxyethyl (meth)acrylate, benzyl (meth)acrylate, or phenyl (meth)acrylate is more preferable; and phenoxyethyl (meth)acrylate or benzyl (meth)acrylate is still more preferable.

As the structural unit containing an alkyl group, a structural unit derived from an alkyl group-containing monomer is preferable.

Examples of the alkyl group-containing monomer include alkyl (meth)acrylate such as methyl (meth)acrylate, ethyl (meth)acrylate, isopropyl (meth)acrylate, n-propyl (meth)acrylate, n-butyl (meth)acrylate, isobutyl (meth)acrylate, t-butyl (meth)acrylate, hexyl (meth)acrylate, or ethylhexyl (meth)acrylate; an ethylenically unsaturated monomer containing a hydroxyl group such as hydroxymethyl (meth)acrylate, 2-hydroxyethyl (meth)acrylate, 2-hydroxypropyl (meth)acrylate, 4-hydroxybutyl (meth)acrylate, hydroxypentyl (meth)acrylate, or hydroxyhexyl (meth)acrylate; dialkylaminoalkyl (meth)acrylate such as dimethylamonoethyl (meth)acrylate; and (meth)acrylamide, for example, N-hydroxyalkyl (meth)acrylamide such as N-hydroxymethyl (meth)acrylamide, N-hydroxyethyl (meth)acrylamide, or N-hydroxybutyl (meth)acrylamide, and N-alkoxyalkyl (meth)acrylamide such as N-methoxymethyl (meth)acrylamide, N-ethoxymethyl (meth)acrylamide, N-(n-,iso)butoxymethyl (meth)acrylamide, N-methoxyethyl (meth)acrylamide, N-ethoxyethyl (meth)acrylamide, or N-(n-,iso)butoxyethyl (meth)acrylamide.

Among these, alkyl (meth)acrylate is preferable; alkyl (meth)acrylate in which the number of carbon atoms in an alkyl group is in a range of 1 to 4 is more preferable; methyl (meth)acrylate, ethyl (meth)acrylate, isopropyl (meth)acrylate, or butyl (meth)acrylate is still more preferable; and methyl (meth)acrylate is even still more preferable.

The weight-average molecular weight of the resin constituting the resin particles A (preferably the self-dispersing resin particles, the same applies hereinafter) is preferably in a range of 3000 to 200000, more preferably in a range of 5000 to 150000, and still more preferably in a range of 10000 to 100000.

In a case where the weight-average molecular weight thereof is 3000 or greater, the amount of water-soluble components can be effectively suppressed. Further, the self-dispersion stability can be improved by setting the weight-average molecular weight thereof to 200000 or less.

The weight-average molecular weight of the resin constituting the resin particles A indicates a value measured by gel permeation chromatography (GPC).

The measurement according to gel permeation chromatography (GPC) is performed using HLC (registered trademark)-8020GPC (manufactured by Tosoh Corporation) as a measuring device, three columns of TSKgel (registered trademark) Super Multipore HZ-H (manufactured by Tosoh Corporation, 4.6 mmID × 15 cm), and tetrahydrofuran (THF) as an eluent. Further, the measurement is performed under measurement conditions of a sample concentration of 0.45% by mass, a flow rate of 0.35 ml/min, a sample injection volume of 10 μl, and a measurement temperature of 40°C using a differential refractive index (RI) detector.

Further, the calibration curve is prepared using eight samples of "F-40", "F-20", "F-4", "F-1", "A-5000", "A-2500", "A-1000", and "n-propylbenzene" which are "Standard Samples TSK standard, polystyrene" (manufactured by Tosoh Corporation).

From the viewpoints of the self-dispersibility and the aggregation rate in a case where a treatment liquid is in contact with the resin, the acid value of the resin constituting the resin particles A is preferably 100 mgKOH/g or less and more preferably in a range of 25 mgKOH/g to 100 mgKOH/g.

The volume average particle diameter of the resin particles A is preferably in a range of 1 nm to 200 nm, more preferably in a range of 1 nm to 150 nm, still more preferably in a range of 1 nm to 100 nm, and particularly preferably in a range of 1 nm to 10 nm. In a case where the volume average particle diameter thereof is 1 nm or greater, the manufacturing suitability is improved. Further, in a case where the volume average particle diameter is 200 nm or less, the storage stability is improved. Further, the particle size distribution of resin particles A is not particularly limited, and any of resin particles having a wide particle size distribution or resin particles having a monodispersed particle size distribution may be used.

The volume average particle diameter of the resin particles A is measured by a particle size distribution measuring device (for example, MICROTRAC UPA (registered trademark) EX150, manufactured by NIKKISO CO., LTD.) using light scattering is employed.

From the viewpoint of improving the concealability, the refractive index of the resin particles A is preferably 1.0 to 1.7.

The resin particles A may be used alone or in combination of two or more kinds thereof.

The content of the resin particles A (preferably self-dispersing resin particles) in the ink composition (the total content in a case where two or more kinds of particles are present) is not particularly limited, but is preferably in a range of 1.0% by mass to 12.0% by mass, more preferably in a range of 3.0% by mass to 10.0% by mass, and still more preferably in a range of 5.0% by mass to 10.0% by mass with respect to the total mass of the ink composition.

In a case where the content thereof is 5.0% by mass or greater, the concealability of the image is further improved.

In a case where the content thereof is 10.0% by mass or less, the jetting stability of the ink composition can be further improved, and it is also advantageous in that the generation of precipitates in a low temperature environment is suppressed.

Further, the volume content of the resin particles A is preferably in a range of 80% by volume to 100% by volume, more preferably in a range of 85% by volume to 100% by volume and still more preferably in a range of 90% by volume to 100% by volume with respect to the volume of all the resin particles contained in the ink composition according to the embodiment of the present disclosure.

The resin particles other than the resin particles A included in "all the resin particles contained in the ink composition" will be described below.

Hereinafter, specific examples of the resin particles A will be described, but the present disclosure is not limited thereto. Further, the values in the parentheses indicate the mass ratio of the copolymer components.

- Copolymer of methyl methacrylate/isobornyl methacrylate/methacrylic acid/sodium methacrylate (70/20/5/5), Tg: 150°C
- Joncryl (registered trademark) JDX-C3080 (manufactured by Johnson Polymers, Ltd.), Tg: 130°C.
- TREPEARL (registered trademark) EP, manufactured by Toray Industries, Inc., Tg: 190°C
- TREPEARL (registered trademark) PES, manufactured by Toray Industries, Inc., Tg: 225°C

<Other resin particles>

The ink composition according to the embodiment of the present disclosure may further contain other resin particles.

Examples of other pigment particles include the same resin particles as the above-described resin particles A except that the Tg thereof is 120°C or lower. For example, in the acrylic resin particles of the resin particles A, particles having a Tg of 120°C or lower by changing the content ratio of the structural units are exemplified.

In a case where the ink composition according to the embodiment of the present disclosure further contains other resin particles, the rub resistance of an image to be obtained is improved.

In the present disclosure, the resin particles A and other resin particles are collectively referred to as "all the resin particles contained in the ink composition".

From the viewpoint of the concealability of an image to be obtained, the content (y% by mass described below) of all the resin particles contained in the ink composition is preferably 1% by mass or greater, preferably 3% by mass or greater, and more preferably 5% by mass or greater with respect to the total mass of the ink composition according to the embodiment of the present disclosure.

Further, from the viewpoint of the jetting stability, the content thereof is preferably 15% by mass or less and more preferably 12% by mass or less.

<Dispersant>

The ink composition may contain a dispersant for dispersing the pigment (any or both the specific pigment particles and other pigment particles described above). As the dispersant, any of a polymer dispersant or a low-molecular-weight surfactant-type dispersant may be used. Further, as the polymer dispersant, any of a water-soluble dispersant or a water-insoluble dispersant may be used.

Preferred examples of the dispersant include dispersants described in paragraphs 0080 to 0096 of JP2016-145312A.

The content of the dispersant is preferably in a range of 3% by mass to 20% by mass, more preferably in a range of 4% by mass to 18% by mass, and still more preferably in a range of 5% by mass to 15% by mass with respect to the content of all the pigment particles contained in the ink composition.

Further, the content (z% by mass described below) of the dispersant is preferably in a range of 0.1% by mass to 2.4% by mass, more preferably in a range of 0.5% by mass to 2.0% by mass, and still more preferably in a range of 0.8% by mass to 1.5% by mass with respect to the total mass of the ink composition.

<Water>

The ink composition contains water.

The content of water is preferably in a range of 50% by mass to 90% by mass and more preferably in a range of 60% by mass to 80% by mass with respect to the total mass of the ink composition.

<Water-soluble solvent>

It is preferable that the ink composition contains at least one water-soluble solvent.

In this manner, the effect of suppressing drying of the ink composition or the effect of wetting the ink composition can be obtained.

The water-soluble solvent which may be contained in the ink composition can be used, for example, as an anti-drying agent that prevents clogging due to aggregates formed by the ink composition being attached to an ink jet port of an injection nozzle and being dried.

From the viewpoints of suppressing drying and performing wetting, as the water-soluble solvent contained in the ink composition, a water-soluble solvent having a lower vapor pressure than that of water is preferable.

In addition, the boiling point of the water-soluble solvent at 1 atm (1013.25 hPa) is preferably in a range of 80°C to 300°C and more preferably in a range of 120°C to 250°C.

As the anti-drying agent, a water-soluble solvent which has a lower vapor pressure than that of water is preferable.

Specific examples of such a water-soluble solvent include polyhydric alcohols represented by ethylene glycol, propylene glycol, diethylene glycol, polyethylene glycol, thiodiglycol, dithiodiglycol, 2-methyl-1,3-propanediol, 1,2,6-hexanetriol, an acetylene glycol derivative, glycerin, and trimethylolpropane.

Among these, polyhydric alcohol such as glycerin or diethylene glycol is preferable as the anti-drying agent.

The anti-drying agent may be used alone or in combination of two or more kinds thereof. The content of the anti-drying agent is preferably in a range of 10% by mass to 50% by mass with respect to the total mass of the ink composition.

The water-soluble solvent may be used for adjusting the viscosity of the ink composition in addition to the purse of use described above.

Specific examples of the water-soluble solvent which can be used for adjusting the viscosity include alcohols (such as methanol, ethanol, propanol, isopropanol, butanol, isobutanol, sec-butanol, t-butanol, pentanol, hexanol, cyclohexanol, and benzyl alcohol), polyhydric alcohols (such as ethylene glycol, diethylene glycol, triethylene glycol, polyethylene glycol, propylene glycol, dipropylene glycol, polypropylene glycol, butylene glycol, hexanediol, pentanediol, glycerin, hexanetriol, and thiodiglycol), glycol derivatives (such as ethylene glycol monomethyl ether, ethylene glycol monoethyl ether, ethylene glycol monobutyl ether, diethylene glycol monomethyl ether, diethylene glycol monobutyl ether, diethylene glycol monobutyl ether, propylene glycol monomethyl ether, propylene glycol monobutyl ether, dipropylene glycol monomethyl ether, triethylene glycol monomethyl ether, ethylene glycol diacetate, ethylene glycol monomethyl ether acetate, triethylene glycol monomethyl ether, triethylene glycol monoethyl ether, and ethylene glycol monophenyl ether), amines (such as ethanolamine, diethanolamine, triethanolamine, N-methyldiethanolamine, N-ethyldiethanolamine, morpholine, N-ethylmorpholine, ethylenediamine, diethylenetriamine, triethylenetetramine, polyethyleneimine, and tetramethylpropylenediamine), and other polar solvents (such as formamide, N,N-dimethylformamide, N,N-dimethylacetamide, dimethyl sulfoxide, sulfolane, 2-pyrrolidone, N-methyl-2-pyrrolidone, N-vinyl-2-pyrrolidone, 2-oxazolidone, 1,3-dimethyl-2-imidazolidinone, acetonitrile, and acetone).

In this case, the water-soluble solvent may also be used alone or in combination of two or more kinds thereof.

(Other additives)

The ink composition may contain components other than the components described above.

Examples of other components include known additives such as a fading inhibitor, an emulsion stabilizer, a penetration enhancer, an ultraviolet absorbing agent, a preservative, an antibacterial agent, a pH adjuster, a surface tension adjuster, an antifoaming agent, a viscosity adjuster, a dispersion stabilizer, a rust inhibitor, and a chelating agent.

<Relationship of content of each component>

From the viewpoint of achieving both the concealability and the jetting stability in an image to be obtained, x% by mass of a content of all the pigment particles contained in the ink composition with respect to the total mass of the ink composition and y% by mass of a content of all the resin particles contained in the ink composition with respect to the total mass of the ink composition satisfy preferably all Expressions A-1 to A-3 and more preferably all Expressions B-1 to B-3.

$$\text{Expression A-1: } x^2 + y^2 \leq 300$$

$$\text{Expression A-2: } x \geq 5$$

$$\text{Expression A-3: } y \geq 1$$

$$\text{Expression B-1: } x^2 + y^2 \leq 300$$

$$\text{Expression B-2: } 12 \geq x \geq 5$$

$$\text{Expression B-3: } 12 \geq y \geq 1$$

Further, from the viewpoint of achieving both the concealability and the jetting stability in an image to be obtained, x% by mass of the content of all the pigment particles contained in the ink composition with respect to the total mass of the ink composition, y% by mass of the content of all the resin particles contained in the ink composition with respect to the total mass of the ink composition, and z% by mass of the content of the dispersant with respect to the total mass of the ink composition satisfy preferably all Expressions C-1 to C-4 and more preferably all Expressions D-1 to D-4.

$$\text{Expression C-1: } x^2 + (y + z)^2 \leq 350$$

$$\text{Expression C-2: } x \geq 5$$

$$\text{Expression C-3: } y \geq 1$$

$$\text{Expression C-4: } z \geq 0.1$$

$$\text{Expression D-1: } x^2 + (y + z)^2 \leq 350$$

$$\text{Expression D-2: } 12 \geq x \geq 5$$

$$\text{Expression D-3: } 12 \geq y \geq 1$$

$$\text{Expression D-4: } 2.4 \geq z \geq 0.1$$

<Physical properties of ink composition>

The pH of the ink composition according to the embodiment of the present disclosure is preferably in a range of 4 to 10 and more preferably in a range of 5 to 9.

In the present disclosure, the pH is measured in an environment of a temperature of 23°C and a relative humidity of 55% RH using a pH meter, unless otherwise specified.

The viscosity of the ink composition according to the embodiment of the present disclosure is preferably in a range of 1 mPa·s to 30 mPa·s and more preferably in a range of 1.5 mPa·s to 20 mPa·s.

In the present disclosure, the viscosity is measured under conditions of a measurement temperature of 23°C and a shear rate of 1,400 $s^{-1}$ using a TV-20 type viscometer (manufactured by Toki Sangyo Co., Ltd.) as a measuring device, unless otherwise specified.

The surface tension of the ink composition according to the embodiment of the present disclosure is preferably in a range of 20 mN/m to 60 mN/m, more preferably in a range of 20 mN/m to 45 mN/m, and still more preferably in a range of 25 mN/m to 40 mN/m.

In the present disclosure, the surface tension thereof is measured under a temperature condition of 25°C using an Automatic Surface Tensiometer CBVP-Z (manufactured by Kyowa Interface Science Co., Ltd.) according to a plate method.

(Image recording method)

Hereinafter, an example of the image recording method according to the embodiment of the present disclosure will be described.

It is preferable that the image recording method according to the embodiment of the present disclosure includes a step of applying the ink composition according to the embodiment of the present disclosure onto the surface of the base material using an ink jet method.

The image recording method according to the embodiment of the present disclosure may include other steps as necessary.

In the image recording method according to the embodiment of the present disclosure, an image having excellent jetting stability and excellent concealability is obtained from the ink composition using the ink jet method.

The reason why the effects of the jetting stability and the concealability are obtained is as described above.

Hereinafter, each step in an example of the image recording method according to the embodiment of the present disclosure will be described.

<Ink applying step>

The step of applying the ink composition onto the surface of the base material (also referred to as the "ink applying step") is a step of applying the ink composition according to the embodiment of the present disclosure onto the surface of the base material using an ink jet method.

The ink composition may be applied on the surface of the base material so as to come into contact with the base material, may be applied to come into contact with at least a part of a region on the surface of the base material, to which the treatment liquid described below has been applied, or may be applied to come into contact with at least a part of a region, to which another ink composition recorded on the surface of the base material has been applied, and the region to which the ink composition is applied is not particularly limited as long as the region is on the surface of the base material.

The ink composition can be selectively applied onto the surface of the base material by performing the above-described step. In this manner, a desired image (specifically, a visible image) can be recorded.

In the ink applying step, only one kind of the ink composition according to the embodiment of the present disclosure or two or more kinds of the ink compositions according to the embodiment of the present disclosure may be applied.

As a method of applying the ink composition in the ink applying step, a known ink jet method can be applied.

The method of jetting the ink composition in the ink jet method is not particularly limited, and any of known methods such as an electric charge control method of jetting an ink composition using an electrostatic attraction force; a drop-on-demand method (pressure pulse method) using a vibration pressure of a piezoelectric element; an acoustic ink jet method of jetting an ink composition using a radiation pressure by converting an electric signal into an acoustic beam and irradiating the ink composition with the acoustic beam; and a thermal ink jet (bubble jet (registered trademark)) method of heating an ink composition to form bubbles and utilizing the generated pressure may be used.

As the ink jet method, particularly, an ink jet method described in JP1979-059936A (JP-S54-059936A) in which an ink composition is jetted from a nozzle using an action force caused by a rapid change in volume of the ink composition after being subjected to an action of thermal energy can be effectively used.

Further, the method described in paragraphs 0093 to 0105 of JP2003-306623A can also be employed as the ink jet method.

The application of the ink composition according to the ink jet method is performed by allying the ink composition to be jetted from a nozzle of an ink jet head.

Examples of the system of the ink jet head include a shuttle system of performing recording while scanning a short serial head in the width direction of the base material and a line system of using a line head in which recording elements are aligned in correspondence with the entire area of one side of the base material.

In the line system, image recording can be performed on the entire surface of the base material by scanning the base material in a direction intersecting the direction in which the recording elements are aligned. In the line system, a transport system such as a carriage that scans a short head in the shuttle system is not necessary. Further, in the line system, since the movement of a carriage and complicated scanning control between the head and the base material are not necessary as compared with the shuttle system, only the base material moves. Therefore, according to the line system, image recording at a higher speed than that of the shuttle system can be realized.

From the viewpoint of obtaining a high-definition image, the liquid droplet amount of the ink composition jetted from the nozzle of the ink jet head is preferably in a range of 1 pL (pico liter) to 10 pL and more preferably in a range of 1.5 pL to 6 pL.

In addition, from the viewpoints of improving the image irregularity and improving connection of continuous gradations, it is also effective that the ink is jetted by combining different amounts of liquid droplets.

Further, the ink jet head may comprise a liquid repellent film on the surface to which the ink composition is jetted (ink jetted surface). Examples of the liquid repellent film include those described in paragraphs 0178 to 0184 of JP2016-193980A.

In the ink applying step, the applied ink composition may be heated and dried.

Examples of the means for heating and drying the ink include known heating means such as a heater, known air blowing means such as a dryer, and means for combining these.

Examples of the method for heating and drying the ink composition include a method of applying heat using a heater or the like from a side of the base material opposite to the surface to which the ink composition has been applied; a method of applying warm air or hot air to the surface of the base material to which the ink has been applied; a method of applying heat using an infrared heater from the surface of the base material to which the ink composition has been applied or from a side of the base material opposite to the surface to which the treatment liquid has been applied; and a method of combining a plurality of these methods.

The heating temperature of heating and drying the ink composition is preferably 55°C or higher, more preferably 60°C or higher, and particularly preferably 65°C or higher.

The upper limit of the heating temperature is not particularly limited, and the upper limit thereof is preferably 100°C and more preferably 90°C or higher.

The time of heating and drying the ink composition is not particularly limited, but is preferably in a range of 3 seconds to 60 seconds, more preferably in a range of 5 seconds to 60 seconds, and particularly preferably in a range of 10 seconds to 45 seconds.

Further, in the ink applying step, the base material (or the base material to which the treatment liquid has been applied in the treatment liquid adding step described below) may be heated before the application of the ink composition.

The heating temperature may be appropriately set according to the kind of the base material, the composition of the ink composition, and the like, but the temperature of the base material is set to be preferably in a range of 20°C to 50°C and more preferably in a range of 25°C to 40°C.

In the step of adding the treatment liquid described below, in a case where the treatment liquid is heated and dried, the heating for heating and drying the treatment liquid may also serve as the heating of the base material before the application of the ink composition.

[Base material]

The base material used in the image recording method according to the embodiment of the present disclosure is not particularly limited, and examples thereof include paper, coated paper, a resin base material, a metal, a ceramic, glass, and a textile base material.

In the image recording method according to the present disclosure, it is also preferable to use an impermeable base material because an image with excellent concealability can be obtained.

In a case where an impermeable base material is used in the image recording method according to the embodiment of the present disclosure, it is preferable that the image recording method according to the embodiment of the present disclosure further includes a treatment liquid adding step described below.

In the present disclosure, the "impermeable base material" indicates a base material that absorbs less water or does not absorb water. Specifically, the "impermeable base material" indicates a base material having a water absorption amount of 0.3 $g/m^2$ or less.

The water absorption amount ($g/m^2$) of the base material is measured as follows.

Water is brought into contact with a region having a size of 100 mm × 100 mm in the front surface of the base material (that is, the surface to which an image is recorded), and the state is maintained at 25°C for 1 minute. The mass (absorption amount (g)) of water absorbed by maintaining the state for 1 minute is acquired, and the obtained absorption amount (g) is converted to the absorption amount per unit area ($g/m^2$).

The impermeable base material is not particularly limited, but a resin base material is preferable.

The resin base material is not particularly limited, and examples thereof include a base material formed of a thermoplastic resin.

A base material obtained by molding a thermoplastic resin in the form of a sheet is exemplified as the resin base material.

It is preferable that the resin base material contains polypropylene, polyethylene terephthalate, nylon, polyethylene, or polyimide.

The resin base material may be a transparent resin base material or a colored resin base material, and at least a part thereof may be subjected to a metal vapor deposition treatment or the like.

In the present disclosure, the term "transparent" indicates that the minimum transmittance at a wavelength of 400 nm to 700 nm at 23°C is 80% or greater (preferably 90% or greater and more preferably 95% or greater). The minimum transmittance is measured in every 1 nm using a spectrophotometer (for example, spectrophotometer UV-2100, manufactured by Shimadzu Corporation).

The shape of the resin base material is not particularly limited, but a sheet-shaped resin base material is preferable. From the viewpoint of the productivity of the image recorded material, a sheet-shaped resin base material which is capable of forming a roll by being wound is more preferable.

The thickness of the resin base material is preferably in a range of 10 $\mu$m to 200 $\mu$m and more preferably in a range of 10 $\mu$m to 100 $\mu$m.

<Treatment liquid adding step>

The image recording method according to the embodiment of the present disclosure further includes a step of adding a treatment liquid containing an aggregating agent onto the surface of the base material before the step of applying the ink composition onto the surface of the base material (also referred to as the "treatment liquid adding step"), and it is preferable that the step of applying the ink composition onto the surface of the base material is a step of applying the ink composition to at least a part of a region on the surface of the base material, to which the treatment liquid has been applied, using the ink jet method.

Further, the ink applying step of applying the ink composition to at least a part of a region on the surface of the base material, to which the treatment liquid has been applied, using the ink jet method is the same as the step of applying the ink composition onto the surface of the base material except that the ink composition is applied to at least a part of the region on the surface of the base material to which the treatment liquid has been applied, and the preferred embodiments are the same as described above.

The application of the treatment liquid onto the impermeable base material can be performed by employing a known method such as a coating method, an ink jet method, or an immersion method.

Examples of the coating method include known coating methods using a bar coater (such as a wire bar coater), an extrusion die coater, an air doctor coater, a blade coater, a rod coater, a knife coater, a squeeze coater, a reserve roll coater, a gravure coater, or a flexo coater.

The details of the ink jet method are the same as the details of the ink jet method which can be applied to the ink applying step described above.

The mass (g/m$^2$) of the treatment liquid to be applied per unit area is not particularly limited as long as the components in the ink composition can be aggregated, but is preferably in a range of 0.1 g/m$^2$ to 10 g/m$^2$, more preferably in a range of 0.5 g/m$^2$ to 6.0 g/m$^2$, and still more preferably in a range of 1.0 g/m$^2$ to 4.0 g/m$^2$.

The amount of the aggregating agent applied to the base material is preferably in a range of 0.3 mmol/m$^2$ to 2.2 mmol/m$^2$, more preferably in a range of 0.5 mmol/m$^2$ to 2.0 mmol/m$^2$, and still more preferably in a range of 0.8 mmol/m$^2$ to 1.8 mmol/m$^2$.

Further, the base material may be heated before the application of the treatment liquid in the treatment liquid adding step.

The heating temperature may be appropriately set according to the kind of the base material or the composition of the treatment liquid, but the temperature of the impermeable base material is set to be preferably in a range of 20°C to 50°C and more preferably in a range of 25°C to 40°C.

In the treatment liquid adding step, the treatment liquid may be heated and dried after the application of the treatment liquid and before the ink applying step described above.

Examples of the means for heating and drying the treatment liquid include known heating means such as a heater, known air blowing means such as a dryer, and means for combining these.

Examples of the method of heating and drying the treatment liquid include a method of applying heat using a heater or the like from a side of the base material opposite to the surface to which the treatment liquid has been applied; a method of applying warm air or hot air to the surface of the base material to which the treatment liquid has been applied; a method of applying heat using an infrared heater from the surface of the base material to which the treatment liquid has been applied or from a side of the base material opposite to the surface to which the treatment liquid has been applied; and a method of combining a plurality of these methods.

The heating temperature of heating and drying the treatment liquid is preferably 35°C or higher and more preferably 40°C or higher.

The upper limit of the heating temperature is not particularly limited, and the upper limit thereof is preferably 100°C, more preferably 90°C, and still more preferably 70°C.

The time of heating and drying the treatment liquid is not particularly limited, but is preferably in a range of 0.5 seconds to 60 seconds, more preferably in a range of 0.5 seconds to 20 seconds, and particularly preferably in a range of 0.5 seconds to 10 seconds.

Hereinafter, the details of the treatment liquid used in the image recording method according to the embodiment of the present disclosure will be described.

[Treatment liquid]

- Aggregating agent -

The treatment liquid contains at least one aggregating agent selected from the group consisting of a polyvalent metal compound, an organic acid, a metal complex, and a water-soluble cationic polymer.

Among these, a treatment liquid containing an organic acid is preferable from the viewpoint of the concealability.

In a case where the treatment liquid contains an aggregating agent, the adhesiveness of an image to be recorded is further improved. Specifically, in a case where an image is recorded by applying the treatment liquid and the ink composition in this order to the impermeable base material, the aggregating agent exerts a function of aggregating components in the ink composition on the surface of the impermeable base material. In this manner, the rub resistance of the image is improved.

<<Polyvalent metal compound>>

Examples of the polyvalent metal compound include alkaline earth metals of a group 2 (such as magnesium and calcium) in the periodic table, transition metals of a group 3 (such as lanthanum) in the periodic table, cations of a group 13 (such as aluminum) in the periodic table, and salts of lanthanides (such as neodymium).

As salts of these metals, salts of organic acids, a nitrate, a chloride, and a thiocyanate described below are suitable.

Among these, a calcium salt or magnesium salt of an organic acid (such as formic acid, acetic acid, or a benzoate), a calcium salt or magnesium salt of nitric acid, calcium chloride, magnesium chloride, and a calcium salt or magnesium salt of thiocyanic acid are preferable.

Further, it is preferable that at least a part of the polyvalent metal compound is dissociated into polyvalent metal ions and counter ions in the treatment liquid.

<<Organic acid>>

As the organic acid, an organic compound containing an acidic group is exemplified.

Examples of the acidic group include a phosphoric acid group, a phosphonic acid group, a phosphinic acid group, a sulfuric acid group, a sulfonic acid group, a sulfinic acid group, and a carboxy group.

From the viewpoint of the aggregation rate of the ink composition, a phosphoric acid group or a carboxy group is preferable, and a carboxy group is more preferable as the acidic group.

Further, it is preferable that at least a part of the acidic group is dissociated in the treatment liquid.

Preferred examples of the organic compound containing a carboxy group include polyacrylic acid, acetic acid, formic acid, benzoic acid, glycolic acid, malonic acid, malic acid (preferably DL-malic acid), maleic acid, succinic acid, glutaric acid, fumaric acid, citric acid, tartaric acid, phthalic acid, 4-methylphthalic acid, lactic acid, pyrrolidone carboxylic acid, pyrrone carboxylic acid, pyrrole carboxylic acid, furan carboxylic acid, pyridine carboxylic acid, coumarinic acid, thiophene carboxylic acid, and nicotinic acid. These compounds may be used alone or in combination of two or more kinds thereof.

From the viewpoint of the aggregation rate of the ink composition, as the organic compound containing a carboxy group, di- or higher valent carboxylic acid (hereinafter, also referred to as polyvalent carboxylic acid) is preferable, and dicarboxylic acid is more preferable.

As the dicarboxylic acid, malonic acid, malic acid, maleic acid, succinic acid, glutaric acid, fumaric acid, tartaric acid, 4-methylphthalic acid, or citric acid is more preferable, and malonic acid, malic acid, tartaric acid, or citric acid is preferable.

It is preferable that the organic acid has a low pKa (for example, 1.0 to 5.0).

In this manner, the surface charge of particles such as polymer particles or the pigment stably dispersed in the ink composition by a weakly acidic functional group such as a carboxy group is reduced by bringing the ink composition into contact with an organic acidic compound having a lower pKa to degrade the dispersion stability.

It is preferable that the organic acid has a low pKa and a high solubility in water and is di- or higher valent and more preferable that the organic acid is a di- or trivalent acidic substance which has a high buffer capacity in a pH region whose pKa is lower than the pKa of the functional group (for example, a carboxy group) that allows the particles to be stably dispersed in the ink.

<<Metal complex>>

As the metal complex, a metal complex including at least one selected from the group consisting of zirconium, aluminum, and titanium as a metal element is preferable.

As the metal complex, a metal complex including at least one selected from the group consisting of acetate, acetylacetonate, methylacetoacetate, ethylacetoacetate, octylene glycolate, butoxyacetylacetonate, lactate, lactate ammonium salt, and triethanol aminate as a ligand is preferable.

As the metal complex, various metal complexes are commercially available, and a commercially available metal complex may be used in the present disclosure. Further, various organic ligands, particularly various multidentate ligands that are capable of forming metal chelate catalysts are commercially available. Accordingly, a metal complex prepared by combining a commercially available organic ligand with a metal may be used.

Examples of the metal complex include zirconium tetraacetyl acetonate (for example, "ORGATIX ZC-150", manufactured by Matsumoto Fine Chemical Co., Ltd.), zirconium monoacetyl acetonate (for example, "ORGATIX ZC-540", manufactured by Matsumoto Fine Chemical Co., Ltd.), zirconium bisacetyl acetonate (for example, "ORGATIX ZC-550", manufactured by Matsumoto Fine Chemical Co., Ltd.), zirconium monoethyl acetoacetate (for example, "ORGATIX ZC-560", manufactured by Matsumoto Fine Chemical Co., Ltd.), zirconium acetate (for example, "ORGATIX ZC-115", manufactured by Matsumoto Fine Chemical Co., Ltd.), titanium diisopropoxy bis(acetylacetonate) (for example, "ORGATIX TC-100", manufactured by Matsumoto Fine Chemical Co., Ltd.), titanium tetraacetyl acetonate (for example, "ORGATIX TC-401", manufactured by Matsumoto Fine Chemical Co., Ltd.), titanium dioctyloxy bis(octylene glycolate) (for example, "ORGATIX TC-200", manufactured by Matsumoto Fine Chemical Co., Ltd.), titanium diisopropoxy bis(ethyl-lacetoacetate) (for example, "ORGATIX TC-750", manufactured by Matsumoto Fine Chemical Co., Ltd.), zirconium tetraacetyl acetonate (for example, "ORGATIX ZC-700", manufactured by Matsumoto Fine Chemical Co., Ltd.), zirconium tributoxy monoacetyl acetonate (for example, "ORGATIX ZC-540", manufactured by Matsumoto Fine Chemical Co., Ltd.), zirconium monobutoxy acetyl acetonate bis(ethylacetoacetate) (for example, "ORGATIX ZC-570", manufactured by Matsumoto Fine Chemical Co., Ltd.), zirconium dibutoxy bis(ethylacetoacetate) (for example, "ORGATIX ZC-580", manufactured by Matsumoto Fine Chemical Co., Ltd.), aluminum trisacetyl acetonate (for example, "ORGATIX AL-80", manufactured by Matsumoto Fine Chemical Co., Ltd.), titanium lactate ammonium salt (for example, "ORGATIX TC-300", manufactured by Matsumoto Fine Chemical Co., Ltd.), titanium lactate (for example, "ORGATIX TC-310, 315", manufactured by Matsumoto Fine Chemical Co., Ltd.), titanium triethanol aminate (for example, "ORGATIX TC-400", manufactured by Matsumoto Fine Chemical Co., Ltd.), and a zirconyl chloride compound (for example, "ORGATIX ZC-126", manufactured by Matsumoto Fine Chemical Co., Ltd.).

Among these, titanium lactate ammonium salt (for example, "ORGATIX TC-300", manufactured by Matsumoto Fine Chemical Co., Ltd.), titanium lactate (for example, "ORGATIX TC-310, 315", manufactured by Matsumoto Fine Chemical Co., Ltd.), titanium triethanol aminate (for example, "ORGATIX TC-400", manufactured by Matsumoto Fine Chemical Co., Ltd.), and a zirconyl chloride compound (for example, "ORGATIX ZC-126", manufactured by Matsumoto Fine Chemical Co., Ltd.) are preferable.

<<Water-soluble cationic polymer>>

Examples of the water-soluble cationic polymer include polyallylamine, polyallylamine derivatives, poly-2-hydroxypropyldimethylammonium chloride, and poly(diallyldimethylammonium chloride).

The water-soluble cationic polymer can refer to the descriptions in known documents such as JP2011-042150A (particularly, paragraph 0156) and JP2007-098610A (particularly, paragraphs 0096 to 0108) as appropriate.

Examples of commercially available products of the water-soluble cationic polymer include SHALLOL (registered trademark) DC-303P and SHALLOL DC-902P (both manufactured by DKS Co., Ltd.), CATIOMASTER (registered trademark) PD-7 and CATIOMASTER PD -30 (both manufactured by Yokkaichi Chemical Co., Ltd.) and UNISENCE FPA100L (manufactured by Senka Corporation).

In the present disclosure, the term "water-soluble" indicates a property in which a substance is dissolved in water at a certain concentration or higher.

In the present disclosure, as the "water-soluble" property, a property in which the amount of a substance to be dissolved in 100 g of water at 25°C is 5 g or greater (more preferably 10 g or greater) is preferable.

The content of the aggregating agent is not particularly limited.

From the viewpoint of the aggregation rate of the ink composition, the content of the aggregating agent is preferably in a range of 0.1% by mass to 40% by mass, more preferably in a range of 0.1% by mass to 30% by mass, still more preferably in a range of 1% by mass to 20% by mass, and particularly preferably in a range of 1% by mass to 10% by mass with respect to the total amount of the treatment liquid.

- Water -

It is preferable that the treatment liquid contains water.

The content of water is preferably in a range of 50% by mass to 90% by mass and more preferably in a range of 60% by mass to 80% by mass with respect to the total mass of the treatment liquid.

- Resin particles -

The treatment liquid may contain resin particles. In a case where the treatment liquid contains resin particles, an image with excellent adhesiveness can be obtained.

From the viewpoint of improving the adhesiveness of an image to be obtained, the Tg - of the resin particles is preferably 100°C or lower and more preferably 75°C or lower.

The resin particles contained in the treatment liquid are not particularly limited, and examples thereof include a polyurethane resin, a polyamide resin, a polyurea resin, a polycarbonate resin, a polyolefin resin, a polystyrene resin, a polyester resin, and an acrylic resin. Among these, the resin particles contain preferably a polyester resin or an acrylic resin and more preferably a polyester resin.

From the viewpoint of improving the glass transition temperature and the water contact angle, the resin contained in the resin particles used in the present disclosure has preferably an alicyclic structure or an aromatic ring structure in the structure and more preferably an aromatic ring structure in the structure.

As the alicyclic structure, an alicyclic hydrocarbon structure having 5 to 10 carbon atoms is preferable, and a cyclohexane ring structure, a dicyclopentanyl ring structure, a dicyclopentenyl ring structure, or an adamantane ring structure is preferable.

As the aromatic ring structure, a naphthalene ring or a benzene ring is preferable, and a benzene ring is more preferable.

The amount of the alicyclic structure or the aromatic ring structure is not particularly limited, and an amount thereof in which the glass transition temperature and the water contact angle of the resin particles are respectively in the above-described range can be preferably used. For example, the amount thereof is preferably in a range of 0.01 mol to 1.5 mol and more preferably in a range of 0.1 mol to 1 mol, per 100 g of the resin contained in the resin particles.

From the viewpoint that the resin particles used in the present disclosure are preferably water-dispersible resin particles described below, it is preferable that the resin contained in the resin particles used in the present disclosure contains an ionic group in the structure.

The ionic group may be an anionic group or a cationic group, but an anionic group is preferable from the viewpoint of ease of introduction.

The anionic group is not particularly limited, but a carboxy group or a sulfo group is preferable, and a sulfo group is more preferable.

The amount of the ionic group is not particularly limited, and an amount thereof in which the resin particles are water-dispersible resin particles can be preferably used. For example, the amount thereof is preferably in a range of 0.001 mol to 1.0 mol and more preferably in a range of 0.01 mol to 0.5 mol, per 100 g of the resin contained in the resin particles.

The content of resin particles is not particularly limited.

The content of the resin particles is preferably in a range of 0.5% by mass to 30% by mass, more preferably in a range of 1% by mass to 20% by mass, and particularly preferably in a range of 1% by mass to 15% by mass with respect to the total mass of the treatment liquid.

- Water-soluble solvent -

It is preferable that the treatment liquid contains at least one kind of water-soluble solvent.

As the water-soluble solvent, known solvents can be used without particular limitation.

Examples of the water-soluble solvent include polyhydric alcohol such as glycerin, 1,2,6-hexanetriol, trimethylolpropane, alkanediol (for example, ethylene glycol, propylene glycol (1,2-propanediol), 1,3-propanediol, 1,3-butanediol, 1,4-butanediol, 2-butene-1,4-diol, 2-ethyl-1,3-hexanediol, 2-methyl-2,4-pentanediol, 1,2-octanediol, 1,2-hexanediol, 1,2-pentanediol, or 4-methyl-1,2-pentanediol), or polyalkylene glycol (for example, diethylene glycol, triethylene glycol, tetraethylene glycol, pentaethylene glycol, dipropylene glycol, or polyoxyethylene polyoxypropylene glycol); polyhydric alcohol ether such as polyalkylene glycol ether (for example, diethylene glycol monoalkyl ether, triethylene glycol monoalkyl ether, tripropylene glycol monoalkyl ether, or polyoxypropylene glyceryl ether); and saccharides, sugar alcohols, hyaluronic acids, alkyl alcohols having 1 to 4 carbon atoms, glycol ethers, 2-pyrrolidone, and N-methyl-2-pyrrolidone described in paragraph 0116 of JP2011-042150A.

Among these, from the viewpoint of suppressing transfer of components, polyhydric alcohol or polyhydric alcohol ether is preferable, and alkanediol, polyalkylene glycol, or polyalkylene glycol ether is more preferable.

- Surfactant -

The treatment liquid may contain at least one kind of surfactant.

The surfactant can be used as a surface tension adjuster or an antifoaming agent. Examples of the surface tension adjuster or the antifoaming agent include a non-ionic surfactant, a cationic surfactant, an anionic surfactant, and a betaine surfactant. Among these, from the viewpoint of the aggregation rate of the ink composition, a non-ionic surfactant or an anionic surfactant is preferable.

Examples of the surfactant include compounds exemplified as surfactants in pp. 37 and 38 of JP1984-157636A (JP-S59-157636A) and Research Disclosure No. 308119 (1989). Further, other examples of the surfactant include fluorine-based (fluorinated alkyl-based) surfactants and silicone-based surfactants described in JP2003-322926A, JP2004-325707A, and JP2004-309806A.

In a case where the treatment liquid contains a surfactant, the content of the surfactant in the treatment liquid is not particularly limited, but the content thereof can be set such that the surface tension of the treatment liquid reaches preferably 50 mN/m or less, more preferably in a range of 20 mN/m to 50 mN/m, and still more preferably in a range of 30 mN/m to 45 mN/m.

For example, in a case where the treatment liquid contains a surfactant as an antifoaming agent, the content of the surfactant as an antifoaming agent is preferably in a range of 0.0001% by mass to 1% by mass and more preferably in a range of 0.001% by mass to 0.1% by mass with respect to the total amount of the treatment liquid.

- Other components -

The treatment liquid may contain other components in addition to the above-described components as necessary.

Examples of other components that may be contained in the treatment liquid include known additives such as a solid wetting agent, colloidal silica, an inorganic salt, a fading inhibitor, an emulsion stabilizer, a penetration enhancer, an ultraviolet absorbing agent, a preservative, an antibacterial agent, a pH adjuster, a viscosity adjuster, a rust inhibitor, a chelating agent, and a water-soluble polymer compound other than a water-soluble cationic polymer (for example, water-soluble polymer compounds described in paragraphs 0026 to 0080 of JP2013-001854A).

(Physical properties of treatment liquid)

From the viewpoint of the aggregation rate of the ink composition, the pH of the treatment liquid at 25°C is preferably in a range of 0.1 to 3.5.

In a case where the pH of the treatment liquid is 0.1 or greater, the roughness of the impermeable base material is further reduced and the adhesiveness of the image area is further improved.

In a case where the pH of the treatment liquid is 3.5 or less, the aggregation rate is further improved, coalescence of dots (ink dots) caused by the ink composition on the surface of the impermeable base material is further suppressed, and the roughness of the image is further reduced.

The pH of the treatment liquid at 25°C is more preferably in a range of 0.2 to 2.0.

In the case where the treatment liquid contains an aggregating agent, from the viewpoint of the aggregation rate of the ink, the viscosity of the treatment liquid is preferably in a range of 0.5 mPa·s to 10 mPa·s and more preferably in a range of 1 mPa·s to 5 mPa·s. The viscosity is a value measured using a VISCOMETER TV-22 (manufactured by TOKI SANGYO CO., LTD.) under a temperature condition of 25°C.

The surface tension of the treatment liquid at 25°C is preferably 60 mN/m or less, more preferably in a range of 20 mN/m to 50 mN/m, and still more preferably in a range of 30 mN/m to 45 mN/m. In a case where the surface tension of the treatment liquid is in the above-described range, the adhesiveness between the impermeable base material and the pretreatment liquid is improved. The surface tension of the treatment liquid is measured using an Automatic Surface Tensiometer CBVP-Z (manufactured by Kyowa Interface Science Co., Ltd.) according to a plate method.

<Other steps>

The image recording method according to the embodiment of the present disclosure may further include other steps.

Examples of the other steps include a step of applying other ink compositions onto the surface of the base material.

It is preferable that the step of applying other ink compositions is performed before the above-described ink applying step.

By applying the ink composition according to the embodiment of the present disclosure onto other ink compositions (or a solidified material thereof) applied in the above-described step, in a case where the base material is observed from a side of the base material to which the ink composition has not been applied, another image between the image formed of the ink composition according to the embodiment of the present disclosure and the base material can be recorded using the region to which the ink composition according to the embodiment of the present disclosure has been applied as a base.

In a case where such an image is formed, a transparent base material is preferably used.

The method of applying other ink compositions is not particularly limited, and examples thereof include the same method as the ink jet method in the step of applying the ink composition according to the embodiment of the present disclosure onto the surface of the base material.

Further, other ink compositions are not particularly limited, and examples thereof include known aqueous inks.

As other ink compositions, only one or two or more kinds of ink compositions may be applied. By applying two or more kinds of other ink compositions described above, for example, it is possible to record a polychromic image between the base and the base material recorded with the ink composition according to the embodiment of the present disclosure.

In addition, the step of applying other ink compositions may be performed after the above-described ink applying step. As such an embodiment, for example, a step of applying other ink compositions to at least a part of a region on the surface of the base material to which the ink composition according to the embodiment of the present disclosure has been applied is exemplified.

According to the above-described step, it is possible to record another image on the ink composition according to the embodiment of the present disclosure using, as a base, the region on the surface of the base material, to which the ink composition according to the embodiment of the present disclosure has been applied.

(Image recorded material)

The image recorded material according to the embodiment of the present disclosure contains a base material and a solidified material of the ink composition according to the embodiment of the present disclosure.

It is preferable that the image recorded material according to the embodiment of the present disclosure is an image recorded material obtained by the image recording method according to the embodiment of the present disclosure.

The base material in the image recorded material according to the embodiment of the present disclosure has the same definition as that for the base material in the image recording method according to the embodiment of the present disclosure described above, and the preferred embodiments thereof are also the same as described above.

In the present disclosure, the "solidified material" indicates a material obtained by removing at least some of water and/or solvent components contained in the composition and is obtained, for example, by drying the composition containing water and/or solvent components.

It is preferable that the image recorded material according to the embodiment of the present disclosure further contains a solidified material of the treatment liquid in the above-described image recording method according to the embodiment of the present disclosure.

It is preferable that the solidified material of the treatment liquid is present in at least a part of a region between the solidified material of the ink composition according to the embodiment of the present disclosure and the base material.

Further, it is preferable that at least a part of the solidified material of the treatment liquid is in contact with at least a part of the solidified material of the ink composition according to the embodiment of the present disclosure.

Further, the image recorded material according to the embodiment of the present disclosure may further contain solidified materials of other ink compositions. Here, other ink compositions have the same definition as that for other ink compositions in the image recording method according to the embodiment of the present disclosure described above, and the preferred embodiments are also the same as described above.

It is preferable that the solidified materials of other ink compositions are present on at least a part of the solidified material of the ink composition according to the embodiment of the present disclosure.

In the image recorded material according to the embodiment of the present disclosure, the solidified material of the ink composition according to the embodiment of the present disclosure, the solidified material of the treatment liquid, and the solidified materials of other ink compositions may be contained alone or two or more kinds thereof, respectively.

<Laminate>

The image recorded material according to the embodiment of the present disclosure may be a laminate further including a base material for lamination on a side of the image recorded material where the image has been recorded.
The laminate is obtained, for example, by laminating a base material for lamination on the side of the image recorded material where the image has been recorded.
The base material for lamination may be laminated directly on a side of the image recorded material where the image has been recorded or through another layer (for example, an adhesive layer).
The base material for lamination in a case of being directly laminated on a side of the image recorded material where the image has been recorded can be laminated according to a known method such as thermocompression bonding or thermal fusion welding.
Further, the base material for lamination in a case of being laminated through an adhesive layer on a side of the image recorded material where the image has been recorded can be laminated according to, for example, a method of coating the side of the image recorded material where the image is recorded with an adhesive, placing the base material for lamination, and bonding the image recorded material to the base material for lamination.
Further, the base material for lamination in the case of being laminated through an adhesive layer on a side of the image recorded material where the image has been recorded can be laminated according to an extrusion lamination method (that is, sandwich lamination) or the like.
It is preferable that the adhesive layer in the mode of laminating the base material through the adhesive layer on a side of the image recorded material where the image has been recorded contains an isocyanate compound.
In a case where the adhesive layer contains an isocyanate compound, since the adhesiveness between the adhesive layer and the ink-derived layer of the image is further improved, the lamination intensity can be further improved.
As the base material for lamination, a resin base material is preferable.
The resin base material is not particularly limited, and examples thereof include a base material formed of a thermoplastic resin.
A base material obtained by molding a thermoplastic resin in the form of a sheet is exemplified as the resin base material.
It is preferable that the resin base material contains polypropylene, polyethylene terephthalate, nylon, polyethylene, or polyimide.
The shape of the resin base material is not particularly limited, but it is preferable that the resin base material is in the form of a sheet.
The thickness of the resin base material is preferably in a range of 10 $\mu$m to 200 $\mu$m and more preferably in a range of 10 $\mu$m to 100 $\mu$m.

(Image recording device)

An image recording device used for the image recording method according to the embodiment of the present disclosure is not particularly limited as long as the image recording device includes an image recording unit that performs an ink jet method.
As the image recording unit that performs an ink jet method, for example, known ink jet recording devices described in JP2010-083021A, JP2009-234221A, and JP1998-175315A (JP-H10-175315A) can be used.
Hereinafter, an example of the image recording device which can be used for the image recording method according to the embodiment of the present disclosure will be described with reference to Fig. 1.
The image recording device illustrated in Fig. 1 comprises a treatment liquid applying unit that applies the treatment liquid, and an image recording unit that performs an ink jet method.
Here, Fig. 1 is a schematic configuration view illustrating a configuration example of the image recording device.
As illustrated in Fig. 1, the image recording device includes a treatment liquid applying unit 12 comprising an anilox roller 20 and a coating roller 22 that is brought into contact with the anilox roller 20 as the roller materials used for sequentially applying the treatment liquid from a supply unit 11 of the base material toward the transport direction (the arrow direction in Fig. 1) of the base material; a treatment liquid drying zone 13 comprising a heating unit (not illustrated) used for drying the applied treatment liquid; an ink jetting unit 14 which jets various inks compositions; and an ink drying zone 15 where the jetted ink is dried.
In a case where the treatment liquid is not applied, the treatment liquid applying unit 12 and the treatment liquid drying zone 13 may not be provided.
The supply unit 11 of the base material in the image recording device may be a supply unit that supplies the base material from a case which is charged with the base material or a supply unit that supplies the base material from a roll around which the base material is wound in a roll shape.

The base material is sequentially sent by transport rollers 41, 42, 43, 44, 45, and 46 from the supply unit 11 through the treatment liquid applying unit 12, the treatment liquid drying zone 13, the ink jetting unit 14, and the ink drying zone 15, and then accumulated in an accumulation unit 16.

In the accumulation unit 16, the base material may be wound in a roll shape.

As the method of transporting the base material, a drum transport method using a drum-shaped member, a belt transport method, or a stage transport method using a stage may be employed in addition to the method of transporting the base material using a transport roller as illustrated in Fig. 1.

Among the plurality of arranged transport rollers 41, 42, 43, 44, 45, and 46, at least one transport roller can be formed into a driving roller to which the power of a motor (not illustrated) has been transmitted.

The base material is transported at a predetermined transport speed in a predetermined direction by rotating the driving roller rotating by the motor at a constant speed.

The treatment liquid applying unit 12 is provided with an anilox roller 20 disposed by being partially immersed in a storage tray in which the treatment liquid is stored and a coating roller 22 brought into contact with the anilox roller 20. The anilox roller 20 is a roller material for supplying a predetermined amount of the treatment liquid to the coating roller 22 disposed to oppose the image recorded surface of the base material. The base material is uniformly coated with the treatment liquid by the coating roller 22 to which an appropriate amount of the treatment liquid has been supplied from the anilox roller 20.

The coating roller 22 is configured so as to transport the base material in a pair with an opposing roller 24, and the base material passes between the coating roller 22 and the opposing roller 24 and is sent to the treatment liquid drying zone 13.

The treatment liquid drying zone 13 is disposed downstream of the treatment liquid applying unit 12 in the transport direction of the base material.

The treatment liquid drying zone 13 can be configured using known heating means such as a heater, air blowing means for blowing air such as a dryer or an air knife, and means for combining these.

Examples of the heating means include a method of installing a heating element such as a heater on a side of the base material opposite to the surface (that is, the image recorded surface) to which the treatment liquid has been applied (for example, in a case where the base material is automatically transported, below the transport mechanism for mounting and transporting the base material), a method of applying warm air or hot air to the surface of the base material to which the treatment liquid has been applied (that is, the image recorded surface), and a heating method using an infrared heater. Further, the heating means may be a combination of a plurality of the above-described methods.

In the treatment liquid drying zone 13, the solvent may be removed from the treatment liquid using a solvent removal roller or the like.

The ink jetting unit 14 is disposed downstream of the treatment liquid drying zone 13 in the transport direction of the base material.

In the ink jetting unit 14, recording heads (ink jet heads) 30K, 30C, 30M, 30Y, 30A, and 30W that are respectively connected to ink storage units storing ink compositions with respective colors, which are black (K), cyan (C), magenta (M), yellow (Y), a special color ink (A), and white (W) are arranged. The respective ink storage units (not illustrated) are configured such that the ink compositions containing colorants corresponding to each color tone and water are stored and supplied to respective ink jet heads 30K, 30C, 30M, 30Y, 30A, and 30W as necessary during image recording.

Since the ink composition according to the embodiment of the present disclosure is preferably a white ink composition, it is preferable that the ink jet head 30W is an ink jet head used for jetting the ink composition according to the embodiment of the present disclosure.

In Fig. 1, the ink jet head 30W is disposed downstream (the most downstream side) of the ink jet head 30A, but may be disposed upstream of the ink jet head 30K.

Examples of the special color ink (A) include an orange ink composition, a green ink composition, a purple ink composition, a light cyan ink composition, and a light magenta ink composition.

In the image recording device applied to the image recording method according to the embodiment of the present disclosure, the ink jet head 30A may not be provided. Further, the image recording device may comprise other special color ink jet heads in addition to the ink jet head 30A.

Further, it is described that the ink jet head 30A is positioned downstream of the yellow (Y) ink jet head 30Y in the transport direction of the base material in Fig. 1 for convenience, but the position thereof is not particularly limited and may be appropriately set in consideration of the brightness or the like of the special color inks.

For example, a form in which the ink jet head 30A is positioned between the yellow ink jet head 30Y and the magenta ink jet head 30M or a form in which the ink jet head 30A is positioned between the magenta ink jet head 30M and the cyan ink jet head 30C is considered.

The ink jet heads 30K, 30C, 30M, 30Y, 30A, and 30W jet inks are used to jet inks corresponding to each image from jet nozzles arranged to oppose the image recorded surface of the base material. In this manner, each color ink is applied onto the image recorded surface of the base material, and thus a color image is recorded.

The ink jet heads 30K, 30C, 30M, 30Y, 30A, and 30W are all full line heads in which a plurality of jet ports (nozzles) are aligned over the maximum recording width (maximum recording width) of an image to be recorded on the surface of the base material. The image recording can be performed on the base material at a higher speed as compared to a serial type head in which recording is performed while reciprocating and scanning a short shuttle head in the width direction (a direction orthogonal to the transport direction of the base material) of the base material.

In the present disclosure, any recording system, for example, a system that enables serial type recording or recording at a relatively high speed, such as a single pass system of forming one line by performing scanning once may be employed. According to the image recording method according to the embodiment of the present disclosure, a high-quality image with excellent reproducibility can be obtained even with the single pass system.

Here, the ink jet heads 30K, 30C, 30M, 30Y, 30A, and 30W all have the same structure.

It is preferable that the application amount of the treatment liquid and the application amount of the ink composition are adjusted as necessary. For example, the application amount of the treatment liquid may be changed in order to adjust the physical properties such as the viscoelasticity and the like of the aggregate obtained by mixing the treatment liquid with the ink composition, depending on the base material.

The ink drying zone 15 is disposed downstream of the ink jetting unit 14 in the transport direction of the base material.

The ink drying zone 15 can be configured in the same manner as the treatment liquid drying zone 13.

The image recording device may further comprise a heating unit that performs a heat treatment on the base material in a transport path from the supply unit 11 to the accumulation unit 16.

For example, drying of the treatment liquid and drying and fixing of the ink composition can be effectively performed by disposing the heating unit at a desired position such as upstream of the treatment liquid drying zone 13 or between the ink jetting unit 14 and the ink drying zone 15 so that the base material is heated to a desired temperature.

Further, since the surface temperature of the base material changes depending on the kind (the material, the thickness, or the like) of the base material, the environmental temperature, and the like, it is preferable that the image recording device comprises a heating control mechanism including a measuring unit that measures the surface temperature of the base material; a heating control unit that controls the heating conditions; and a control unit that feeds back the value of the surface temperature of the base material measured by the measuring unit to the heating control unit.

In a case where the image recording device comprises the heating control mechanism, application of the treatment liquid and application of the ink composition can be performed while the temperature of the base material is controlled.

As the measuring unit that measures the surface temperature of the base material, a contact or non-contact type thermometer is preferable.

Examples

Hereinafter, the present invention will be described in more detail based on examples, but the present invention is not limited to the following examples unless the gist thereof is overstepped. Further, "parts" and "%" are on a mass basis unless otherwise specified.

<Synthesis of resin particles A-1>

A three-neck flask provided with a stirrer, a thermometer, a reflux cooling pipe, and a nitrogen gas introduction pipe was charged with methyl ethyl ketone (281 g), and the solution was heated to 85°C. A mixed solution formed of methyl methacrylate (208 g), isobornyl methacrylate (60 g), methacrylic acid (30 g), methyl ethyl ketone (66 g), and "V-601" (manufactured by Fujifilm Wako Pure Chemical Corporation) (0.66 g) was added dropwise to the methyl ethyl ketone at a constant speed such that the dropwise addition was completed for 3 hours while the reflux state was maintained in the reaction container. After the completion of the dropwise addition, (1) the solution was stirred for 1 hour, a solution formed of "V-601" (0.66 g) and methyl ethyl ketone (3.5 g) was added thereto, and the resulting solution was stirred for 2 hours. Subsequently, the step of (1) was repeated four times, and a solution formed of "V-601" (0.66 g) and methyl ethyl ketone (3.5 g) was further added thereto, and the resulting solution was continuously stirred for 3 hours. After the temperature was lowered to 60°C, isopropyl alcohol (83 g) was added thereto.

Next, 155 g of the polymerization solution (the concentration of solid contents: 40% by mass) was weighed, and methyl ethyl ketone (7 g), isopropyl alcohol (23.1 g), a 20% maleic acid anhydride aqueous solution (0.6 g), and 2 mol/L of a sodium hydroxide (NaOH) aqueous solution (20 g) were added, and the temperature inside the reaction container was raised to 70°C. Next, 190 g of distilled water was added dropwise thereto for water dispersion. Thereafter, the temperature in the reaction container was maintained at 85°C under atmospheric pressure for 1 hour, the pressure in the reaction container was reduced, and isopropyl alcohol and methyl ethyl ketone were distilled off, thereby obtaining an aqueous dispersion of resin particles A-1 (the concentration of solid contents: 30% by mass). The resin particles A-1 had a Tg of 150°C and a weight-average molecular weight of 50000.

<Preparation of ink composition>

In each example and each comparative example, an ink composition was prepared by mixing components so as to have the composition described below and filtering the solution obtained by being stirred at room temperature for 1 hour using a membrane filter having a pore diameter of 5 μm.

The numerical values of the contents listed in Table 1 or Table 2 and parts by mass in the following composition indicate % by mass of the solid content of each compound in a case where the total mass of the ink composition was set to 100% by mass.

[Composition]

- White inorganic pigment particles described in Table 1 or Table 2: The amount was as described in Table 1 or Table 2 and was added as a pigment dispersion described later.
- Dispersant A (diethylethanolamine 80% neutralized product of stearyl methacrylate/benzyl methacrylate/hydroxyethyl methacrylate/methacrylic acid = copolymer at copolymerization ratio of 20/39/27/14 (mass ratio), Mw = 22000): added as a pigment dispersion described below so as to have the amount described in Table 1 or Table 2.
- Propylene glycol (manufactured by manufactured by Fujifilm Wako Pure Chemical Corporation): 20% by mass
- SOLSPERSE (registered trademark) 43000 (manufactured by Noveon Inc.): 0.100% by mass
- Polyvinylpyrrolidone K15 (manufactured by Tokyo Chemical Industry Co., Ltd.): 0.100% by mass
- SURFYNOL 104 (manufactured by Nissin Chemical Industry Co., Ltd.): 1.00% by mass
- SNOWTEX (registered trademark) XS (manufactured by Nissan Chemical Corporation): 0.060% by mass
- Resin particle dispersion shown below: the total content of the resin particles contained in the resin particle dispersion is the total content listed in Table 1 or Table 2
- BYK (registered trademark)-024 (manufactured by BYK-Chemie Japan KK): 0.01% by mass
- Water: remaining amount set such that total amount was 100% by mass

- Synthesis of Dispersant A -

The same mass of dipropylene glycol as the total amount of monomers described below was added to a three-neck flask equipped with a stirrer and a cooling pipe and heated to 85°C in a nitrogen atmosphere.

A solution I obtained by mixing 9.1 molar equivalents of stearyl methacrylate, 34.0 molar equivalents of benzyl methacrylate, 31.9 molar equivalents of hydroxyethyl methacrylate, 25.0 molar equivalents of methacrylic acid, and 0.8 molar equivalents of 2-mercaptopropionic acid and a solution II obtained by dissolving 1% by mass of t-butylperoxy-2-ethylhexanoate (Perbutyl O, manufactured by NOF Corporation) with respect to the total mass of the monomers in 20% by mass of dipropylene glycol with respect to the total mass of the monomers were respectively prepared. The solution I was added dropwise to the three-neck flask for 4 hours, and the solution II was added dropwise thereto for 5 hours.

After the completion of the dropwise addition, the resulting solution was allowed to further react for 2 hours, heated to 95°C, and heated and stirred for 3 hours so that all unreacted monomers were allowed to react. The disappearance of monomers was confirmed by the nuclear magnetic resonance ($^1$H-NMR) method.

The obtained reaction solution was heated to 70°C, 20.0 molar equivalents of dimethylaminoethanol (dimethylethanolamine) was added as an amine compound, propylene glycol was added thereto, and the resulting solution was stirred, thereby obtaining a 30 mass% solution of the dispersant A.

The constituent components of the obtained polymer were confirmed by $^1$H-NMR. Further, the weight-average molecular weight (Mw) determined by GPC was 22000.

In addition, the mass ratio of respective structural units in the dispersant A (structural unit derived from stearyl methacrylate/ structural unit derived from benzyl methacrylate/ structural unit derived from hydroxyethyl methacrylate/ structural unit derived from methacrylic acid) was 20/39/27/14. Here, the mass ratio does not include the mass of dimethylaminoethanol.

[Pigment dispersion]

The white inorganic pigment particles and the dispersant A were added as a pigment dispersion prepared as described below.

A pigment dispersion was prepared in the following manner using a Lady Mill model LSG-4U-08 (manufactured by AIMEX Co., Ltd.). White inorganic pigment particles, a 30 mass% solution of the dispersant A, and ultrapure water were added to a container made of zirconia. Further, 0.5 mm$\varphi$ zirconia beads (Torayceram beads manufactured by Toray Industries, Inc.) (white inorganic pigment particles:beads = 1.125:1 (mass ratio)) were added thereto and mixed gently using a spatula.

The container made of zirconia was placed in a ball mill and dispersed at a rotation speed of 1000 rpm for 5 hours. After the dispersion was completed, the beads were removed by filtration with a filter cloth to obtain a pigment dispersion which was an aqueous pigment dispersion having a pigment concentration of 45% by mass.

Further, in each example or comparative example, the kind and the amount of the inorganic pigment particles and the amount of the dispersant A were appropriately set such that the final content reached the value listed in Table 1 or 2 and a pigment dispersion having a pigment concentration of 45% by mass was obtained.

[Resin particle dispersion]

In a case where one kind of resin particles were contained in the ink composition in each example and each comparative example, an aqueous dispersion of the above-described resin particles A-1 or EP, PES, C3080, or J690 described below was used as a resin particle dispersion.

In a case where two or more kinds of resin particles were contained in the ink composition in each example and each comparative example, an aqueous dispersion of the above-described resin particles A-1 and resin particles C3080 or J690 described below were mixed so as to have a volume ratio listed in the columns of "volume ratio" in Table 1 to obtain a mixture and then used as a resin particle dispersion. The concentration of solid contents in the mixture was set to 30% by mass.

<Preparation of treatment liquid>

In Examples 27 to 35, the treatment liquids were prepared by mixing the components so as to have the compositions shown below.

[Composition]

- Eastek (registered trademark) 1100 (manufactured by Eastman Chemical Company): 10% by mass
- Aggregating agent listed in columns of "type of aggregating agent" in Table 2: 5% by mass
- Propylene glycol (manufactured by Fujifilm Wako Pure Chemical Corporation): 10% by mass
- Water: 75% by mass

<Evaluation of concealability>

A GELJET (registered trademark) GX5000 printer head (manufactured by Ricoh Co., Ltd.) was prepared. The printer head is a line head in which 96 nozzles are arranged.

The printer head was fixedly disposed in an ink jet recording device having the same configuration as the ink jet recording device illustrated in Fig. 1.

The disposition here was made such that the direction in which 96 nozzles were arranged was inclined by 75.7° with respect to a direction orthogonal to a movement direction of a stage of an ink jet device on the same plane.

A liquid repellent film containing a fluorine compound is provided on the ink jetted surface of the line head. The liquid repellent film containing a fluorine compound is a monomolecular film (SAM film) of $C_8F_{17}C_2H_4SiCl_3$.

A polyethylene terephthalate (PET) base material (FE2001, thickness of 12 $\mu$m, manufactured by Futamura Chemical Co., Ltd.) was prepared as the base material, and the following ink applying step and drying step were sequentially performed in Examples 1 to 26 and Comparative Examples 1 to 3. Further, the following treatment liquid adding step, ink applying step, and drying step were sequentially performed in Examples 27 to 35.

[Treatment liquid adding step]

The PET base material was fixed onto the stage of the ink jet recording device, and the recording medium was coated with the treatment liquid such that the coating amount thereof was set to approximately 1.5 g/m² using a wire bar coater while the stage onto which the recording medium had been fixed was allowed to move in a linear direction at a constant speed of 500 mm/sec.

The drying of the treatment liquid was started at a site where the application of the treatment liquid was completed, under a temperature condition of 50°C using a dryer 1.5 seconds after the completion of the application of the treatment liquid to the site, and the drying was completed 3.5 seconds after the completion of the application of the treatment liquid. The drying time here was 2 seconds.

[Ink application step]

While each base material to which the treatment liquid had not been applied (Examples 1 to 26 or Comparative Examples 1 to 3) or each base material in which the treatment liquid had been completely dried (Examples 27 to 35) was allowed to move at a constant stage speed of 50 mm/sec, the ink composition prepared in each example or each comparative example was jetted to the surface of the recording medium, to which the treatment liquid had been applied, from the printer head based on the line system to form a solid film. The application amount of the ink was set such that the film thickness of the solidified material of the dried ink composition was set to 0.8 $\mu$m, 1 $\mu$m, 1.5 $\mu$m, 2 $\mu$m, 3 $\mu$m, or 4 $\mu$m.

In Examples 27 to 35, the jetting of the ink composition was started within 2 seconds after the treatment liquid was completely dried.

The ink composition was jetted under conditions of an ink droplet amount of 4.5 pL, a jetting frequency of 24 kHz, and a resolution of 1200 dpi $\times$ 1200 dpi (dot per inch).

Further, an ink composition which was degassed through a degassing filter and in which the temperature thereof was adjusted to 30°C was used as the ink composition.

[Drying step]

The jetted ink composition immediately after image recording was dried at 70°C for 10 seconds.

[Evaluation]

The evaluation was performed based on the following evaluation standards by holding the obtained image recorded material up to a 30 W fluorescent lamp to determine whether the shape of the fluorescent lamp was visible.

The distance between the evaluator and the image recorded material was set to 20 cm, and the distance between the image recorded material and the fluorescent lamp tube was set to 2 m.

The evaluation results are listed in Table 1 or 2. It can be said that the concealability of the image is excellent in a case where the fluorescent lamp is not able to be visually recognized even with an image having a small film thickness. That is, it can be said that the concealability of the image is excellent as the numerical value (1 to 7) of the evaluation result in the following evaluation standards increases.

- Evaluation standards -

7: The shape of the fluorescent lamp was not able to be visually recognized in a case where an image having a film thickness of 0.8 $\mu$m was used.

6: The shape of the fluorescent lamp was able to be visually recognized in a case where an image having a film thickness of 0.8 $\mu$m was used, but the shape of the fluorescent lamp was not able to be visually recognized in a case where an image having a film thickness of 1 $\mu$m was used.

5: The shape of the fluorescent lamp was able to be visually recognized in a case where an image having a film thickness of 1 $\mu$m was used, but the shape of the fluorescent lamp was not able to be visually recognized in a case where an image having a film thickness of 1.5 $\mu$m was used.

4: The shape of the fluorescent lamp was able to be visually recognized in a case where an image having a film thickness of 1.5 $\mu$m was used, but the shape of the fluorescent lamp was not able to be visually recognized in a case where an image having a film thickness of 2 $\mu$m was used.

3: The shape of the fluorescent lamp was able to be visually recognized in a case where an image having a film thickness of 2 $\mu$m was used, but the shape of the fluorescent lamp was not able to be visually recognized in a case where an image having a film thickness of 3 $\mu$m was used.

2: The shape of the fluorescent lamp was able to be visually recognized in a case where an image having a film thickness of 3 $\mu$m was used, but the shape of the fluorescent lamp was not able to be visually recognized in a case where an image having a film thickness of 4 $\mu$m was used.

1: The shape of the fluorescent lamp was able to be visually recognized in a case where an image having a film thickness of 4 μm was used.

<Evaluation of jetting stability>

In each example and each comparative example, an image was recorded (first image recording) by performing the same treatment liquid adding step, ink applying step, and drying step as in the above-described evaluation of the concealability except that a dot image (jetting amount of 4.5 pL, image forming range of 7 mm × 9 mm) was used as the image to be recorded. After the completion of the image recording, the ink jet device was allowed to stand for 30 minutes (in an environment of 25°C and a relative humidity of 50%) without performing image recording.
After the completion of the standing, the image recording was performed, as the second image recording, by using another PET base material according to the same method as that for the first image recording.
After the completion of the second image recording, the ratio of the number of nozzles (jet failure nozzles) from which the ink was not jetted to the total number of nozzles in the ink jet head (jet failure nozzle rate, %) was calculated, the evaluation was performed based on the following evaluation standards, and the results are listed in Tables 1 and 2.
It can be said that the ink jet jetting stability is excellent as the number of jet failure nozzles decreases. That is, it can be said that the jetting stability is excellent as the numerical value (1 to 5) of the evaluation result in the following evaluation standards increases.

- Evaluation standards -

5: The jet failure nozzle rate was less than 20%.
4: The jet failure nozzle rate was 20% or greater and less than 40%.
3: The jet failure nozzle rate was 40% or greater and less than 60%.
2: The jet failure nozzle rate was 60% or greater and less than 80%.
1: The jet failure nozzle rate was 80% or greater.

[Table 1]

| | White inorganic pigment particles | | | | | | Resin particles | | | | | | | Amount of dispersant | TiO2/Specific pigment particles | Resin particles A/all resin particles | x²+y² | x²+(y+z)² | D/P | Evaluation | |
| | Titanium oxide particles | | | Other than titanium oxide particles | | | Resin particles A | | | Resin particles having Tg of 120°C or lower | | | Total content | | | | | | | Concealability | Jetting stability |
| | Type | Particle diameter (nm) | Content | Type | Particle diameter (nm) | Content | Type | Tg (°C) | Volume ratio | Type | Tg (°C) | Volume ratio | | | | | | | | | |
| Example 1 | T1 | 210 | 10 | Not available | - | 0 | A-1 | 150 | 1 | Not available | - | 0 | 6 | 1 | 100 | 100 | 136 | 149 | 10 | 5 | 5 |
| Example 2 | T2 | 300 | 10 | Not available | - | 0 | A-1 | 150 | 1 | Not available | - | 0 | 6 | 1 | 100 | 100 | 136 | 149 | 10 | 5 | 5 |
| Example 3 | T3 | 180 | 10 | Not available | - | 0 | A-1 | 150 | 1 | Not available | - | 0 | 6 | 1 | 100 | 100 | 136 | 149 | 10 | 2 | 5 |
| Example 4 | T5 | 400 | 10 | Not available | - | 0 | A-1 | 150 | 1 | Not available | - | 0 | 6 | 1 | 100 | 100 | 136 | 149 | 10 | 5 | 2 |
| Example 5 | T1 | 210 | 10 | Not available | - | 0 | EP | 190 | 1 | Not available | - | 0 | 6 | 1 | 100 | 100 | 136 | 149 | 10 | 4 | 5 |
| Example 6 | T1 | 210 | 10 | Not available | - | 0 | PES | 225 | 1 | Not available | - | 0 | 6 | 1 | 100 | 100 | 136 | 149 | 10 | 2 | 5 |
| Example 7 | T1 | 210 | 10 | Not available | - | 0 | C3080 | 130 | 1 | Not available | - | 0 | 6 | 1 | 100 | 100 | 136 | 149 | 10 | 3 | 5 |
| Example 8 | T1 | 210 | 10 | Not available | - | 0 | A-1 / C3080 | 150 / 130 | 0.5 / 0.5 | Not available | - | 0 | 6 | 1 | 100 | 100 | 136 | 149 | 10 | 4 | 5 |

(continued)

| | White inorganic pigment particles | | | | | | Resin particles | | | | | | Total content | Amount of dispersant | TiO2/Specific pigment particles | Resin particles A/all resin particles | $x^2+y^2$ | $x^2+(y+z)^2$ | D/P | Evaluation | |
| | Titanium oxide particles | | | Other than titanium oxide particles | | | Resin particles A | | | Resin particles having Tg of 120°C or lower | | | | | | | | | | Concealability | Jetting stability |
| | Type | Particle diameter (nm) | Content | Type | Particle diameter (nm) | Content | Type | Tg (°C) | Volume ratio | Type | Tg (°C) | Volume ratio | | | | | | | | | |
| Example 9 | T1 | 210 | 2 | Z1 | 290 | 8 | A-1 | 150 | 1 | Not available | - | 0 | 6 | 1 | 20 | 100 | 136 | 149 | 10 | 3 | 5 |
| Example 10 | Not available | - | 0 | Z1 | 290 | 10 | A-1 | 150 | 1 | Not available | - | 0 | 6 | 1 | 0 | 100 | 136 | 149 | 10 | 2 | 5 |
| Example 11 | T1 | 210 | 5 | B1 | 300 | 5 | A-1 | 150 | 1 | Not available | - | 0 | 6 | 1 | 50 | 100 | 136 | 149 | 10 | 3 | 5 |
| Example 12 | T1 | 210 | 10 | Not available | - | 0 | A-1 | 150 | 0.8 | J690 | 102 | 0.2 | 6 | 1 | 100 | 80 | 136 | 149 | 10 | 3 | 5 |
| Example 13 | T1 | 210 | 10 | Not available | - | 0 | A-1 | 150 | 0.7 | J690 | 102 | 0.3 | 6 | 1 | 100 | 70 | 136 | 149 | 10 | 2 | 5 |
| Example 14 | T1 | 210 | 10 | Not available | - | 0 | A-1 | 150 | 1 | Not available | - | 0 | 9 | 1 | 100 | 100 | 181 | 200 | 10 | 5 | 5 |
| Example 15 | T1 | 210 | 10 | Not available | - | 0 | A-1 | 150 | 1 | Not available | - | 0 | 12 | 1 | 100 | 100 | 244 | 269 | 10 | 5 | 4 |

EP 3 778 797 A1

| | White inorganic pigment particles | | | | | | Resin particles | | | | | | | Total content | Amount of dispersant | TiO2/Specific pigment particles | Resin particles A/all resin particles | $x^2+y^2$ | $x^2+(y+z)^2$ | D/P | Evaluation | |
|---|---|---|---|---|---|---|---|---|---|---|---|---|---|---|---|---|---|---|---|---|---|---|
| | Titanium oxide particles | | | Other than titanium oxide particles | | | Resin particles A | | | Resin particles having Tg of 120°C or lower | | | | | | | | | | | Concealability | Jetting stability |
| | Type | Particle diameter (nm) | Content | Type | Particle diameter (nm) | Content | Type | Tg (°C) | Volume ratio | Type | Tg (°C) | Volume ratio | | | | | | | | | | |
| Example 16 | T1 | 210 | 10 | Not available | - | 0 | A-1 | 150 | 1 | Not available | - | 0 | 15 | 1 | 100 | 100 | 325 | 356 | 10 | 5 | 2 |
| Example 17 | T1 | 210 | 8 | Not available | - | 0 | A-1 | 150 | 1 | Not available | - | 0 | 6 | 1 | 100 | 100 | 100 | 113 | 13 | 5 | 5 |
| Example 18 | T1 | 210 | 8 | Not available | - | 0 | A-1 | 150 | 1 | Not available | - | 0 | 9 | 1 | 100 | 100 | 145 | 164 | 13 | 5 | 5 |
| Example 19 | T1 | 210 | 8 | Not available | - | 0 | A-1 | 150 | 1 | Not available | - | 0 | 12 | 1 | 100 | 100 | 208 | 233 | 13 | 5 | 4 |
| Example 20 | T1 | 210 | 8 | Not available | - | 0 | A-1 | 150 | 1 | Not available | - | 0 | 15 | 1 | 100 | 100 | 289 | 320 | 13 | 5 | 3 |
| Example 21 | T1 | 210 | 12 | Not available | - | 0 | A-1 | 150 | 1 | Not available | - | 0 | 6 | 1 | 100 | 100 | 180 | 193 | 8 | 5 | 5 |
| Example 22 | T1 | 210 | 12 | Not available | - | 0 | A-1 | 150 | 1 | Not available | - | 0 | 9 | 1 | 100 | 100 | 225 | 244 | 8 | 5 | 4 |
| Example 23 | T1 | 210 | 12 | Not available | - | 0 | A-1 | 150 | 1 | Not available | - | 0 | 12 | 1 | 100 | 100 | 288 | 313 | 8 | 5 | 4 |

| | White inorganic pigment particles | | | | | | Resin particles | | | | | | | Amount of dispersant | TiO2/Specific pigment particles | Resin particles A/all resin particles | $x^2+y^2$ | $x^2+(y+z)^2$ | D/P | Evaluation | |
| | Titanium oxide particles | | | Other than titanium oxide particles | | | Resin particles A | | | Resin particles having Tg of 120°C or lower | | | Total content | | | | | | | | |
| | Type | Particle diameter (nm) | Content | Type | Particle diameter (nm) | Content | Type | Tg (°C) | Volume ratio | Type | Tg (°C) | Volume ratio | | | | | | | | Concealability | Jetting stability |
|---|---|---|---|---|---|---|---|---|---|---|---|---|---|---|---|---|---|---|---|---|---|
| Example 24 | T1 | 210 | 12 | Not available | - | 0 | A-1 | 150 | 1 | Not available | - | 0 | 15 | 1 | 100 | 100 | 369 | 400 | 8 | 5 | 2 |
| Example 25 | T1 | 210 | 10 | Not available | - | 0 | A-1 | 150 | 1 | Not available | - | 0 | 6 | 3 | 100 | 100 | 136 | 181 | 30 | 4 | 3 |
| Example 26 | T1 | 210 | 10 | Not available | - | 0 | A-1 | 150 | 1 | Not available | - | 0 | 6 | 0.05 | 100 | 100 | 136 | 137 | 1 | 4 | 3 |
| Comparative Example 1 | T4 | 100 | 10 | Not available | - | 0 | A-1 | 150 | 1 | Not available | - | 0 | 6 | 1 | - | 100 | 136 | 149 | 10 | 1 | 5 |
| Comparative Example 2 | T6 | 500 | 10 | Not available | - | 0 | A-1 | 150 | 1 | Not available | - | 0 | 6 | I | - | 100 | 136 | 149 | 10 | 4 | 1 |
| Comparative Example 3 | T1 | 210 | 10 | Not available | - | 0 | - | - | 0 | J690 | 102 | 1 | 6 | 1 | 100 | 0 | 136 | 149 | 10 | 1 | 5 |

EP 3 778 797 A1

EP 3 778 797 A1

[Table 2]

| | White inorganic pigment particles | | | | | | Resin particles | | | | | | Total content | Amount of dispersant | TiO$_2$/ Specific pigment particles | Resin particles A/all resin particles | x$^2$+y$^2$ | x$^2$+(y+z)$^2$ | D/P | Kind of aggregating agent | Application amount of aggregating agent | Evaluation | |
|---|---|---|---|---|---|---|---|---|---|---|---|---|---|---|---|---|---|---|---|---|---|---|---|
| | Titanium oxide particles | | | Other than titanium oxide particles | | | Resin particles A | | | Resin particles having Tg of 120°C or lower | | | | | | | | | | | | Conceala-bility | Jetting stability |
| | Type | Particle diameter (nm) | Content | Type | Particle diameter (nm) | Content | Type | Tg (°C) | Volume ratio | Type | Tg$^9$ (°C) | Volume ratio | | | | | | | | | | | |
| Example 27 | T1 | 210 | 10 | Not available | | 0 | A-1 | 150 | 1 | Not available | - | 0 | 6 | 1 | 100 | 100 | 136 | 149 | 10 | Malonic acid | 0.3 | 7 | 5 |
| Example 28 | T1 | 210 | 10 | Not available | - | 0 | A-1 | 150 | 1 | Not available | - | 0 | 6 | 1 | 100 | 100 | 136 | 149 | 10 | Malonic acid | 0.2 | 5 | 5 |
| Example 29 | T1 | 210 | 10 | Not available | - | 0 | A-1 | 150 | 1 | Not available | - | 0 | 6 | 1 | 100 | 100 | 136 | 149 | 10 | Malonic acid | 1.2 | 7 | 5 |
| Example 30 | T1 | 210 | 10 | Not available | - | 0 | A-1 | 150 | 1 | Not available | - | 0 | 6 | 1 | 100 | 100 | 136 | 149 | 10 | Malonic acid | 2.2 | 7 | 5 |
| Example 31 | T1 | 210 | 10 | Not available | - | 0 | A-1 | 150 | 1 | Not available | - | 0 | 6 | 1 | 100 | 100 | 136 | 149 | 10 | Malonic acid | 2.6 | 5 | 5 |
| Example 32 | T1 | 210 | 10 | Not available | | 0 | A-1 | 150 | 1 | Not available | - | 0 | 6 | 1 | 100 | 100 | 136 | 149 | 10 | Malonic acid | 0.7 | 7 | 5 |
| Example 33 | T1 | 210 | 10 | Not available | - | 0 | A-1 | 150 | I | Not available | - | 0 | 6 | 1 | 100 | 100 | 136 | 149 | 10 | Acetic acid | 0.7 | 7 | 5 |
| Example 34 | T1 | 210 | 10 | Not available | - | 0 | A-1 | 150 | 1 | Not available | - | 0 | 6 | I | 100 | 100 | 136 | 149 | 10 | CCaCl$_2$ | 0.7 | 6 | 5 |

32

(continued)

| | White inorganic pigment particles | | | | | | Resin particles | | | | | | | Total content | Amount of dispersant | TiO$_2$/Specific pigment particles | Resin particles A/all resin particles | $x^2 + y^2$ | $x^2 + (y+z)^2$ | D/P | Kind of aggregating agent | Application amount of aggregating agent | Evaluation | |
| | Titanium oxide particles | | | Other than titanium oxide particles | | | Resin particles A | | | Resin particles having Tg of 120°C or lower | | | | | | | | | | | | | Conceala-bility | Jetting stability |
| | Type | Particle diameter (nm) | Content | Type | Particle diameter (nm) | Content | Type | Tg (°C) | Volume ratio | Type | Tg$^g$ (°C) | Volume ratio | | | | | | | | | | | |
| Example 35 | T1 | 210 | 10 | Not available | - | 0 | A-1 | 150 | 1 | Not available | - | 0 | 6 | 1 | 100 | 100 | 136 | 149 | 10 | TC-310 | 0.7 | 6 | 5 |

In the treatment liquids used in Examples 27 to 35, the pH of the treatment liquid containing malonic acid an aggregating agent was 1.7, the pH of the treatment liquid containing acetic acid as the aggregating agent was 2.7, the pH of the treatment liquid containing calcium chloride as the aggregating agent was 5.0, and the pH of the treatment liquid containing TC-310 as the aggregating agent was 2.4.

The abbreviations in Table 1 or Table 2 are as follows.

[Titanium oxide particles]

- T1: PF-690 (manufactured by Ishihara Sangyo Kasha, Ltd.)
- T2: JR-301 (manufactured by Tayca Corporation)
- T3: JA-11 (manufactured by Tayca Corporation)
- T4: MPT-141 (manufactured by Ishihara Sangyo Kasha, Ltd.)
- T5: R-38L (400 nm) (manufactured by Sakai Chemical Industry Co., Ltd.)
- T6: Titanium Oxide (500 nm) (manufactured by Nanostructured & Amorphous Materials)

All the titanium oxide particles were of a rutile type and had a refractive index of 2.70.

[White inorganic pigment particles other than titanium oxide]

Z1: fine zinc oxide (zinc oxide, manufactured by Sakai Chemical Industry Co., Ltd.), refractive index of 2.0
B1: B-34 (barium sulfate, manufactured by Sakai Chemical Industry Co., Ltd.), refractive index of 1.6

[Resin particles A]

- A-1: resin particles A-1 shown above, refractive index of 1.4
- EP: TREPEARL (registered trademark) EP, manufactured by Toray Industries, Inc., refractive index of 1.6
- PES: TREPEARL (registered trademark) PES, manufactured by Toray Industries, Inc., refractive index of 1.7
- C3080: Joncryl (registered trademark) JDX-C3080, manufactured by Johnson Polymer, Ltd., refractive index of 1.4

[Resin particles having Tg of 120°C or lower]

- J690: Joncryl (registered trademark) 690, manufactured by Johnson Polymer, Ltd.

[Aggregating agent]

- Malonic acid (manufactured by Fujifilm Wako Pure Chemical Corporation)
- Acetic acid (manufactured by Fujifilm Wako Pure Chemical Corporation)
- CaCl$_2$ (manufactured by Fujifilm Wako Pure Chemical Corporation)
- TC-310: ORGATIX TC-310 (manufactured by Matsumoto Fine Chemical Co., Ltd., titanium lactate)

The average primary particle diameters measured by the above-described method are listed in the columns of "particle diameter" of the white inorganic pigment particles in Table 1 or 2.

The glass transition temperatures of the resin particles measured by the above-described method are listed in the columns of "Tg" of the resin particles in Table 1 or 2.

The contents (% by mass) of the titanium dioxide particles which are specific white inorganic pigment particles with respect to the total mass of the specific pigment particles are listed in the columns of "TiO$_2$/specific pigment particles" in Table 1 or 2.

The volume contents (% by volume) of the resin particles A with respect to the volume of all the resin particles contained in the ink composition are listed in the columns of "resin particles A/all resin particles" in Table 1 or 2.

The values of $x^2 + y^2$ in a case where the content of all the pigment particles contained in the ink composition with respect to the total mass of the ink composition is set to x% by mass and the content of all the resin particles contained in the ink composition with respect to the total mass of the ink composition is set to y% by mass are listed in the columns of "$x^2 + y^2$" in Table 1 or 2.

The values of $x^2 + (y + z)^2$ in a case where the content of all the pigment particles contained in the ink composition with respect to the total mass of the ink composition is set to x% by mass, the content of all the resin particles contained in the ink composition with respect to the total mass of the ink composition is set to y% by mass, and the content of the dispersant with respect to the total mass of the ink composition is set to z% by mass are listed in the columns of "$x^2 + (y + z)^2$" in Table 1 or 2.

The contents (% by mass) of the dispersant with respect to the content of all the pigment particles contained in the ink composition are listed in the columns of "D/P" in Table 1 or 2.

The amounts (mmol/m$^2$) of the treatment liquid to be applied to the base material in the step of adding the treatment liquid onto the surface of the base material are listed in the columns of "application amount of aggregating agent" in Table 2.

As listed in Table 1 and Table 2, in Examples 1 to 35 in which an image was recorded using the ink composition containing water, a dispersant, white inorganic pigment particles having an average primary particle diameter of 150 nm to 400 nm, and resin particles A having a glass transition temperature of higher than 120°C, the jetting stability and the concealability of the image to be obtained were excellent.

In Comparative Example 1 in which the ink composition contained only titanium oxide having an average primary particle diameter of 100 nm as the white inorganic pigment particles, the concealability was decreased as compared to the above-described examples.

Further, in Comparative Example 2 in which the ink composition contained only titanium oxide having an average primary particle diameter of 500 nm as the white inorganic pigment particles, the jetting stability was decreased.

In Comparative Example 3 in which the ink composition contained only resin particles having a glass transition temperature of lower than 120°C as the resin particles, the concealability was decreased.

As shown in the results of Examples 1 to 4, it was found that the balance between the jetting stability and the concealability of the image was more excellent in a case where the ink composition contained white inorganic pigment particles which were the specific white inorganic pigment particles having an average primary particle diameter of 200 nm to 300 nm.

As shown in the results of Examples 1 and 5 to 7, it was found that the concealability of the image was more excellent in a case where the Tg of the resin particles A was in a range of 120°C to 200°C.

As shown in the results of Example 8, it was found that the jetting stability and the concealability of the image were excellent even in a case where the ink composition contained two kinds of resin particles as the resin particles A.

As shown in the results of Examples 1 and 9 to 11, it was found that the concealability of the image was more excellent in a case where the ink composition contained titanium dioxide particles as the specific white inorganic pigment particles and the content of the titanium dioxide particles was 20% by mass or greater with respect to the total mass of the specific white inorganic pigment particles.

As shown in the results of Examples 1, 12, and 13, it was found that the concealability of the image was more excellent in a case where the volume content of the resin particles A with respect to the volume of all the resin particles contained in the ink composition was in a range of 80% by volume to 100% by volume.

As shown in the results of Examples 1 and 14 to 24, it was found that the jetting stability was more excellent in a case where all Expressions A-1 to A-3 were satisfied, and the jetting stability was particularly excellent in a case where all Expressions B-1 to B-3 were satisfied.

As shown in the results of Examples 1 and 14 to 24, it was found that the jetting stability was more excellent in a case where all Expressions C-1 to C-4 were satisfied, and the jetting stability was particularly excellent in a case where all Expressions D-1 to D-4 were satisfied.

As shown in the results of Examples 1, 25, and 26, it was found that the concealability and the jetting stability were more excellent in a case where the content of the dispersant was in a range of 3% by mass to 20% by mass with respect to the content of all the pigment particles contained in the ink composition.

As shown in the results of Examples 27 to 31, it was found that the concealability was more excellent in a case where the amount of the aggregating agent to be applied to the base material was in a range of 0.3 mmol/m$^2$ to 2.2 mmol/m$^2$ in the step of adding the treatment liquid onto the surface of the base material.

As shown in the results of Examples 32 to 35, it was found that the concealability of the image was more excellent in a case where the aggregating agent contained in the treatment liquid was an organic acid.

The disclosure of JP2018-069029A filed on March 30, 2018 is incorporated herein by reference in its entirety.

In a case where all documents, patent applications, and technical standards described in the present specification are specified to be incorporated specifically and individually as cited documents, the documents, patent applications, and technical standards are incorporated herein in the same limited scope as the cited documents.

**Claims**

1. An inkjet ink composition comprising:

   water;
   a dispersant;
   white inorganic pigment particles having an average primary particle diameter of 150 nm to 400 nm; and
   resin particles A having a glass transition temperature of higher than 120°C.

2. The inkjet ink composition according to claim 1,

   wherein titanium dioxide particles are contained as the white inorganic pigment particles, and
   a content of the titanium dioxide particles is 20% by mass or greater with respect to a total mass of the white inorganic pigment particles.

3. The inkjet ink composition according to claim 1 or 2,
   wherein a volume content of the resin particles A is in a range of 80% by volume to 100% by volume with respect to a volume of all resin particles contained in the ink composition.

4. The inkjet ink composition according to any one of claims 1 to 3,
   wherein x% by mass of a content of all pigment particles contained in the ink composition with respect to a total mass of the ink composition and y% by mass of a content of all the resin particles contained in the ink composition with respect to the total mass of the ink composition satisfy all Expressions A-1 to A-3.

$$\text{Expression A-1: } x^2 + y^2 \leq 300$$

$$\text{Expression A-2: } x \geq 5$$

$$\text{Expression A-3: } y \geq 1$$

5. The inkjet ink composition according to any one of claims 1 to 4,
   wherein x% by mass of a content of all pigment particles contained in the ink composition with respect to a total mass of the ink composition and y% by mass of a content of all the resin particles contained in the ink composition with respect to the total mass of the ink composition satisfy all Expressions B-1 to B-3.

$$\text{Expression B-1: } x^2 + y^2 \leq 300$$

$$\text{Expression B-2: } 12 \geq x \geq 5$$

$$\text{Expression B-3: } 12 \geq y \geq 1$$

6. The inkjet ink composition according to any one of claims 1 to 5,
   wherein x% by mass of a content of all pigment particles contained in the ink composition with respect to a total mass of the ink composition, y% by mass of a content of all the resin particles contained in the ink composition with respect to the total mass of the ink composition, and z% by mass of a content of the dispersant with respect to the total mass of the ink composition satisfy all Expressions C-1 to C-4.

$$\text{Expression C-1: } x^2 + (y + z)^2 \leq 350$$

$$\text{Expression C-2: } x \geq 5$$

$$\text{Expression C-3: } y \geq 1$$

$$\text{Expression C-4: } z \geq 0.1$$

**7.** The inkjet ink composition according to any one of claims 1 to 6,
wherein x% by mass of a content of all pigment particles contained in the ink composition with respect to a total mass of the ink composition, y% by mass of a content of all the resin particles contained in the ink composition with respect to the total mass of the ink composition, and z% by mass of a content of the dispersant with respect to the total mass of the ink composition satisfy all Expressions D-1 to D-4.

$$\text{Expression D-1: } x^2 + (y + z)^2 \leq 350$$

$$\text{Expression D-2: } 12 \geq x \geq 5$$

$$\text{Expression D-3: } 12 \geq y \geq 1$$

$$\text{Expression D-4: } 2.4 \geq z \geq 0.1$$

**8.** The inkjet ink composition according to any one of claims 1 to 7,
wherein the glass transition temperature of the resin particles A is higher than 120°C and 200°C or lower.

**9.** The inkjet ink composition according to any one of claims 1 to 8,
wherein a content of the dispersant is in a range of 3% by mass to 20% by mass with respect to a content of all pigment particles contained in the ink composition.

**10.** An image recording method comprising:
a step of applying the inkjet ink composition according to any one of claims 1 to 9 onto a surface of a base material using an ink jet method.

**11.** The image recording method according to claim 10, further comprising:

a step of adding a treatment liquid containing an aggregating agent onto the surface of a base material before the step of applying the inkjet ink composition onto the surface of the base material,
wherein the step of applying the inkjet ink composition onto the surface of the base material is a step of applying the inkjet ink composition to at least a part of a region on the surface of the base material by the ink jet method, the region applied with the treatment liquid.

**12.** The image recording method according to claim 11,
wherein the aggregating agent is an organic acid.

**13.** The image recording method according to claim 11 or 12,
wherein an amount of the aggregating agent to be applied to the base material in the step of adding the treatment liquid onto the surface of the base material is in a range of 0.3 mmol/m$^2$ to 2.2 mmol/m$^2$.

**14.** The image recording method according to any one of claims 10 to 13,
wherein the base material is an impermeable medium.

**15.** An image recorded material comprising:

a base material; and
a solidified material of the inkjet ink composition according to any one of claims 1 to 9.

## FIG. 1

EP 3 778 797 A1

<div align="center">

**INTERNATIONAL SEARCH REPORT**

</div>

| | International application No. |
|---|---|
| | PCT/JP2019/012272 |

**A. CLASSIFICATION OF SUBJECT MATTER**
Int. Cl. C09D11/322(2014.01)i, B41J2/01(2006.01)i, B41M5/00(2006.01)i

According to International Patent Classification (IPC) or to both national classification and IPC

**B. FIELDS SEARCHED**

Minimum documentation searched (classification system followed by classification symbols)
Int. Cl. C09D11/322, B41J2/01, B41M5/00

Documentation searched other than minimum documentation to the extent that such documents are included in the fields searched
Published examined utility model applications of Japan    1922-1996
Published unexamined utility model applications of Japan  1971-2019
Registered utility model specifications of Japan          1996-2019
Published registered utility model applications of Japan  1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2014-185236 A (FUJIFILM CORP.) 02 October 2014, claims 1-3, paragraph [0031], examples & US 2014/0288208 A1, claims 1-3, paragraphs [0041]-[0043], examples & EP 2781564 A1 | 1-15 |
| Y | JP 2011-46872 A (FUJIFILM CORP.) 10 March 2011, claim 1, paragraph [0145], examples & US 2011/0050790 A1, paragraph [0235], claim 1, examples | 1-15 |
| A | JP 2014-43492 A (TOYO INK SC HOLDINGS CO., LTD.) 13 March 2014, entire document (Family: none) | 1-15 |
| A | JP 2014-210837 A (TOYO INK SC HOLDINGS CO., LTD.) 13 November 2014, entire document (Family: none) | 1-15 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26.04.2019 | 14.05.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## INTERNATIONAL SEARCH REPORT

| International application No. |
|---|
| PCT/JP2019/012272 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2015-183112 A (SEIKO EPSON CORP.) 22 October 2015, entire document (Family: none) | 1-15 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014210837 A
- JP 2015183112 A
- JP 2011094112 A
- JP 2010064480 A
- JP 2011068085 A
- JP 2016145312 A
- JP 54059936 A
- JP S54059936 A
- JP 2003306623 A
- JP 2016193980 A
- JP 2011042150 A
- JP 2007098610 A

- JP 59157636 A
- JP S59157636 A
- JP 2003322926 A
- JP 2004325707 A
- JP 2004309806 A
- JP 2013001854 A
- JP 2010083021 A
- JP 2009234221 A
- JP 10175315 A
- JP H10175315 A
- JP 2018069029 A

**Non-patent literature cited in the description**

- **J. BRANDRUP ; E. H. IMMERGUT.** Polymer Handbook. Wiley-Interscience, 1989